# EUROPEAN PATENT APPLICATION

(11) **EP 4 509 572 A1**
(43) Date of publication of application: **19.02.2025**
(21) Application number: 23784680.3
(22) Date of filing: 28.03.2023
(51) Int. Cl.: C09J 11/06, C09J 183/04, C09J 183/05, C09J 183/07, C09J 7/38

(54) **SILICONE ADHESIVE COMPOSITION, ADHESIVE TAPE, AND ADHESIVE FILM**

(30) Priority: 04.04.2022 JP 2022062365
(71) Applicant: SHIN-ETSU CHEMICAL CO., LTD., Tokyo 1000005 (JP)
(72) Inventor: NAKAYAMA Ken, Annaka-shi, Gunma 379-0224 (JP)
(74) Representative: V.O.
(86) International application number: PCT/JP2023/012585
(87) International publication number: WO 2023/195390

(57) **Abstract**

The present invention provides a silicone adhesive composition providing an adhesive layer that maintains high adhesive strength and retention power even at high temperatures exceeding 150 °C, as well as an adhesive tape and an adhesive film having an adhesive layer formed from a cured product of the adhesive composition.

[Solution]

A silicone adhesive composition comprising the following components (A) to (D): (A) 20 to 65 parts by mass of a linear organopolysiloxane having two or more alkenyl groups per molecule and an alkenyl group content of 0.0001 to 0.03 mol/100 g, (B) 35 to 80 parts by mass of an organopolysiloxane resin having one or more alkenyl groups per molecule and having R³₃SiO_{1/2} and SiO_{4/2} units in an amount such that a molar ratio of R³₃SiO_{1/2} units to SiO_{4/2} units is 0.5 to 1.5, wherein R³ is, independently of each other, a substituted or unsubstituted, monovalent hydrocarbon group having 1 to 10 carbon atoms,
provided that the total amount of components (A) and (B) is 100 parts by mass,(C) an organohydrogenpolysiloxane having three or more hydrogen atoms each bonded to a silicon atom per molecule, wherein a proportion of a total number of the hydrogen atom bonded to a silicon atom is 20% to 50%, based on the total number of the hydrogen atom and groups bonded to silicon atoms, and an average polymerization degree of the siloxane is 100 or less, in an amount such that a ratio of the total number of SiH groups in component (C) to the total number of alkenyl groups in components (A) and (B) is 0.1 to 2.0, and (D) a catalyst amount of platinum group metal catalyst. Further, the present invention provides a cured product obtained by curing the silicone adhesive composition and an adhesive film or tape having the cured product.

## Description

### FIELD OF THE INVENTION

The present invention relates to a silicone adhesive composition, and more specifically relates to a silicone adhesive composition that provides an adhesive layer that maintains high adhesive strength and retention power even at high temperatures exceeding 150 °C, as well as an adhesive tape and an adhesive film that include an adhesive layer formed from a cured product of the adhesive composition.

### BACKGROUND OF THE INVENTION

The polysiloxane constituting silicone adhesives has excellent heat resistance, cold resistance, weather resistance, electrical insulation, and chemical resistance. Therefore, adhesive tapes and adhesive films using silicone adhesives are used in harsh environments where acrylic-based adhesives, rubber-based adhesives, or urethane-based adhesives would degenerate or deteriorate.

Examples of applications in high-temperature environments include uses as a tape for masking or temporarily fixing semiconductor components during a reflow process or resin sealing process thereof and as a heat seal tape for protecting the surface of heaters. In recent years, heat treatments have come to be performed at higher temperatures than before, and there is a demand for silicone adhesives with higher heat resistance.

For masking tapes used at high temperatures, the adhesive tape must not peel off even at high temperatures. Further, for heat seal tapes, the adhesive tape must not peel off easily when heated by a heater.

In a case where adhesive tapes using conventional silicone adhesives are used for the aforesaid applications, or in a case where adhesive tapes using conventional silicone adhesives are used for fixing a component to a substrate, or in a case where adhesive tapes using conventional silicone adhesives are wrapped around and affixed to a rod-shaped adherend having a small diameter, or in a case where adhesive tapes using conventional silicone adhesives are affixed to a convex curved surface, exposure to high temperatures exceeding 150 °C causes the edges of the adhesive tape to peel off and rise or causes the adhesive tape to peel off, resulting in the component coming off. This is because silicone adhesives soften due to heat, which decreases the adhesive strength of the adhesive layer.

In contrast, a silicone adhesive having improved heat resistance at high temperatures has been reported. Patent Literature 1 describes that decreasing the amount of octamethylcyclotetrasiloxane and decamethylcyclopentasiloxane in a silicone adhesive composition reduces the amount of adhesive residue after heating at 250 °C to 290 °C.

Further, in Patent Literature 2, the storage modulus G' and tan δ of the silicone adhesive layer cured with an organic peroxide are specified, thereby improving the adhesive strength and adhesive residue properties after heating at 280 °C or reflowing at 300 °C.

Patent Literature 3 describes that a composition comprising a peroxide-curing silicone resin, an organic peroxide curing agent, and an addition-curing silicone rubber in a specific ratio exhibits excellent load durability even at high temperatures of 230 °C or 250 °C.

However, Patent Literature 1 only reports an improvement in heat resistance based on an adhesive residue test after heating at 250 °C to 290 °C and does not describe any adhesive strength at a high temperature.

Further, Patent Literature 2 only measures the peeled distance of the adhesive tape in a repulsion resistance test, and Patent Literature 3 only measures the amount of displacement in a shear direction and the amount of peeling in a 90° direction when a load is placed on the adhesive tape. Any of these Patent Literatures describes that the adhesive tape is resistant to peeling at a high temperature, but not describe that the high adhesive strength at room temperature is maintained even at high temperatures.

Patent Literature 4 describes that an organic peroxide-curing silicone adhesive composition comprising a polyorganosiloxane having SiH groups and a rare-earth carboxylate allows the adhesive strength and retention power to be maintained even at high temperatures exceeding 150 °C. However, in the examples, the adhesive strength at room temperature is 5.2 N/25 mm to 10.1 N/25 mm, but the adhesive strength at 180 °C is 1.7 N/25 mm to 2.9 N/25 mm, showing that decreases in adhesive strength during heating are not suppressed. Thus, it cannot be said that the high adhesive strength at room temperature is maintained.

### PRIOR LITERATURES

### PATENT LITERATURES

Patent Literature 1: Japanese Patent Application Laid-Open No. 2018-119153
Patent Literature 2: WO2019/049200
Patent Literature 3: Japanese Patent Application Laid-Open No. 2015-151447
Patent Literature 4: Japanese Patent Application Laid-Open No. 2010-006918

### BRIEF STATEMENT OF THE INVENTION

### PROBLEMS TO BE SOLVED BY THE INVENTION

As described above, while an adhesive with improved adhesive residue properties after heating and an adhesive that is difficult to peel off at high temperatures have been reported, there are no silicone adhesives that maintains the high adhesive strength at room temperature even at high temperatures.

The present invention has been made in consideration of the aforesaid circumstances and relates to a silicone adhesive composition providing an adhesive layer that maintains high adhesive strength and retention power even at high temperatures exceeding 150 °C, as well as an adhesive tape and an adhesive film having an adhesive layer formed from a cured product of the adhesive composition.

### SOLUTIONS TO THE PROBLEMS

The present inventors have made research to solve the aforesaid problems and found that an addition-curing silicone adhesive composition comprising a linear organopolysiloxane (A) having a specific amount of alkenyl groups, an organopolysiloxane resin (B) having one or more alkenyl groups in one molecule and having a specific ratio of R³₃SiO_{1/2} units and SiO_{4/2} units, and an organohydrogenpolysiloxane (C) having a specific proportion of hydrosilyl groups and an average degree of polymerization of the siloxane of 100 or less, in specific amounts respectively, attains the aforesaid problems and led to the present invention.

That is, the present invention provides a silicone adhesive composition comprising the following components (A) to (D):
(A) 20 to 65 parts by mass of a linear organopolysiloxane having two or more alkenyl groups per molecule and an alkenyl group content of 0.0001 to 0.03 mol/100 g,
(B) 35 to 80 parts by mass of an organopolysiloxane resin having one or more alkenyl groups per molecule and having R³₃SiO_{1/2} and SiO_{4/2} units in an amount such that a molar ratio of R³₃SiO_{1/2} units to SiO_{4/2} units is 0.5 to 1.5, wherein R³ is, independently of each other, a substituted or unsubstituted, monovalent hydrocarbon group having 1 to 10 carbon atoms,
   provided that the total amount of components (A) and (B) is 100 parts by mass,
(C) an organohydrogenpolysiloxane having three or more hydrogen atoms each bonded to a silicon atom per molecule, wherein a proportion of a total number of the hydrogen atom bonded to a silicon atom is 20% to 50%, based on the total number of the hydrogen atom and groups bonded to silicon atoms, and an average polymerization degree of the siloxane is 100 or less, in an amount such that a ratio of the total number of SiH groups in component (C) to the total number of alkenyl groups in components (A) and (B) is 0.1 to 2.0, and
(D) a catalyst amount of platinum group metal catalyst.

The present invention also provides the silicone adhesive composition further having at least one constitute selected from the following constitutes [1] to [5].
[1] The silicone adhesive composition wherein said component (B) has alkenyl groups in an amount of 0.005 to 0.5 mol/100 g.
[2] The silicone adhesive composition wherein the ratio of the total number of SiH groups in component (C) to the total number of alkenyl groups in components (A) and (B) is 0.15 to 0.95.
[3] The silicone adhesive composition wherein component (A) is represented by the following formula (1), 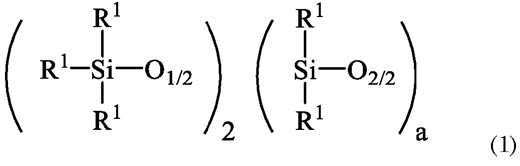 wherein R¹ is, independently of each other, a hydroxyl group or a substituted or unsubstituted monovalent hydrocarbon group having 1 to 10 carbon atoms, provided that at least two of R¹ are an alkenyl group-containing organic group having 2 to 10 carbon atoms, the ratio of the number of hydroxyl groups to the total number of R¹ is 10% or less and the alkenyl group content is 0.0001 to 0.03 mol/100 g, and α is the number such that the viscosity at 25 °C of a 30 mass % solution of the organopolysiloxane dissolved in toluene is 1,000 to 200,000 mPa.s.
[4] The silicone adhesive composition wherein component (C) is represented by the following formula (4), 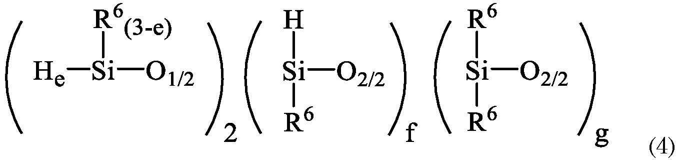 wherein R⁶ is, independently of each other, a hydroxyl group or a substituted or unsubstituted, monovalent hydrocarbon group having 1 to 10 carbon atoms and having no aliphatic unsaturated bond, e is 0 or 1, f and g are integers satisfying equations of 1 ≤ f ≤ 98, 0 ≤ g <_ 60, 3 ≤ 2e + f ≤ 100, and 3 ≤ f + g + 2 ≤ 100 and, a percentage of the total number of the hydrogen atom bonded to a silicon atom is 20 % to 50 %, based on the total number of the hydrogen atom and the group, R⁶, bonded to a silicon atom, and a percentage of the number of hydroxyl groups is 10% or less based on the total number of R⁶.
[5] The silicone adhesive composition wherein component (B) further has a R⁴ R⁵ SiO_{2 / 2} unit and a molar ratio of R⁴R^{B}SiO_{2 / 2} units to SiO_{4/2} units is 0.01 to 0.5, wherein R⁴ is a group defined for the aforesaid R³ other than an alkenyl group and R⁵ is an alkenyl group having 2 to 10 carbon atoms.

The present invention further provides a cured product composed of curing the silicone adhesive compositions, as well as an adhesive tape or adhesive film that has the cured product (adhesive layer).

The present invention preferably provides the adhesive tape, having a substrate and an adhesive layer formed on at least one side of the substrate, the adhesive layer being the cured product above. In another aspect, the present invention preferably provides the adhesive film, having a substrate and an adhesive layer formed on at least one side of the substrate, the adhesive layer being the cured product above.

### EFFECTS OF THE INVENTION

An adhesive tape or adhesive film having an adhesive layer formed by curing the silicone adhesive composition of the present invention maintains high adhesive strength and retention power even at high temperatures exceeding 150 °C. Therefore, this adhesive tape or adhesive film is suitably used as a tape for masking or temporarily fixing electrical components or semiconductor components during a manufacturing process thereof, or as a heat seal tape.

### DETAILED DESCRIPTION OF THE INVENTION

The present invention will be described in more detail below.

### [Component (A)]

Component (A) is a linear organopolysiloxane having two or more alkenyl groups in one molecule. Component (A) may be any linear organopolysiloxane having two or more alkenyl groups in one molecule, and may be used singly or in combination of two or more types.

Component (A) may be an oil-type or raw rubber-type organopolysiloxane, and is preferably a raw rubber-type organopolysiloxane. The viscosity at 25 °C of an oil-type one is preferably 1,000 mPa -s or more, more preferably 10,000 mPa -s or more, or particularly preferably 50,000 mPa -s or more. The viscosity of a raw rubber-type one is such that the viscosity of a solution dissolved the organopolysiloxane in toluene at a concentration of 30% by mass is preferably 1,000 to 200,000 mPa ·s, more preferably 5,000 to 150,000 mPa ·s, still more preferably 10,000 to 120,000 mPa .s, or particularly preferably 15,000 to 100,000 mPa ·s. If the viscosity is less than the aforesaid lower limit, uniform coating may be difficult or the adhesive strength or retention power of the resulting adhesive layer may decrease. If the viscosity is more than the aforesaid upper limit, the viscosity of the composition may be exceedingly high, resulting in worsened workability, such as increased difficulty in stirring and mixing. In this specification, viscosity is a value determined using a rotational viscometer at 25 °C (hereinafter the same applies).

The amount of alkenyl groups contained in component (A) is preferably 0.0001 to 0.03 mol relative to 100 g of organopolysiloxane, more preferably 0.0002 to 0.02 mol/100g, still more preferably 0.0003 to 0.01 mol/100g, or even more preferably 0.0005 to 0.005 mol/100g. If the amount is less than the aforesaid lower limit, the curability may decrease or the retention power or adhesive strength of the resulting adhesive layer may decrease. If the amount is more than the aforesaid upper limit, the crosslink density of the resulting adhesive layer may become high, resulting in a decrease in adhesive strength. The amount of alkenyl groups may typically be determined by a known structural analysis method such as NMR analysis (hereinafter the same applies).

The organopolysiloxane (A) is preferably represented by the following formula (1), 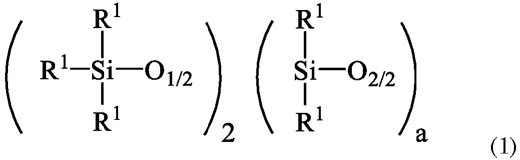 wherein R¹ is, independently of each other, a hydroxyl group or a substituted or unsubstituted monovalent hydrocarbon group having 1 to 10 carbon atoms, provided that at least two of R¹ are an alkenyl group-containing organic group having 2 to 10 carbon atoms, and α is the number such that the viscosity at 25 °C of a 30 mass % solution of the organopolysiloxane dissolved in toluene is 1,000 to 200,000 mPa.s.

In formula (1), R¹ is, independently of each other, a hydroxyl group or a substituted or unsubstituted monovalent hydrocarbon group having 1 to 10 carbon atoms, and at least two R¹ groups are an alkenyl group-containing organic group having 2 to 10 carbon atoms. The alkenyl group-containing organic group has 2 to 10 carbon atoms, preferably 2 to 8 carbon atoms, and may contain an oxygen atom. Examples thereof include: alkenyl groups such as a vinyl group, allyl group, hexenyl group, or octenyl group; and cycloalkenyl alkyl groups such as a cyclohexenyl ethyl group. Examples of alkenyl group-containing monovalent hydrocarbon groups optionally having oxygen atoms include acryloyl alkyl groups and methacryloyl alkyl groups such as an acryloyl propyl group, an acryloyl methyl group, a methacryloyl propyl group, or a methacryloyl methyl group. Further, the methylene chain may contain an ether bond, and examples thereof include -(CH₂)₂-O-CH₂-CH=CH₂ and -(CH₂)₃-O-CH₂-CH=CH₂.

The monovalent hydrocarbon group excluding alkenyl group-containing organic groups is a monovalent hydrocarbon group having 1 to 10 carbon atoms and having no aliphatic unsaturated bond. Examples thereof include alkyl groups preferably having 1 to 6 carbon atoms, such as a methyl group, ethyl group, propyl group or butyl group; cycloalkyl groups preferably having 5 to 8 carbon atoms, such as a cyclohexyl group; aryl groups preferably having 6 to 10 carbon atoms, such as a phenyl group or tolyl group; aralkyl groups preferably having 7 to 10 carbon atoms, such as a benzyl group; and monovalent hydrocarbon groups having 1 to 10 carbon atoms, in which some or all of the hydrogen atoms bonded to carbon atoms are substituted with a hydroxy group, cyano group, halogen atom, alkoxy group, alkoxysilyl group, polyoxyalkylene group, epoxy group, carboxyl group, or the like, such as a hydroxypropyl group, cyanoethyl group, 3-chloropropyl group, 3,3,3-trifluoropropyl group, 3,3,4,4,5,5,6,6,6-nonafluorohexyl group, methoxypropyl group, ethoxypropyl group, or γ-glycidoxypropyl group. Among these, methyl groups or phenyl groups are preferable, and methyl groups are particularly preferable. The proportion of the number of methyl groups to the total number of R¹s is 70% or more, preferably 80% or more, or more preferably 90% or more. If formula (1) contains an aryl group or an aralkyl group as R¹, the proportion of the total number of aryl groups and aralkyl groups to the total number of groups (that is, R¹ in formula (1)) bonded to silicon atoms in the organopolysiloxane is preferably 0.1% to 30%. If the amount of aryl groups or aralkyl groups is more than 30%, the curability of the composition may decrease or the retention power of the resulting adhesive layer may decrease.

When the aforesaid formula (1) has hydroxyl groups, the proportion of the number of hydroxyl groups to the total number of R¹ groups is preferably 10% or less, more preferably 0.001% to 5%, still more preferably 0.002% to 1%. That is, the amount of hydroxyl groups in component (A) is preferably 0.00002 mol/100 g to 0.15 mol/100 g or particularly preferably 0.00005 mol/100 g to 0.03 mol/100 g. Having hydroxyl groups allows component (A) to undergo a condensation reaction with components (B) and (B') described below. The amount of SiOH groups may typically be determined by a known structural analysis method such as NMR analysis.

In formula (1), *a* is preferably 100 to 20,000, more preferably 500 to 15,000, still more preferably 1,000 to 13,500, or even more preferably 2,000 to 12,000. If the value of *a* is less than the aforesaid lower limit, uniform coating may be difficult or the adhesive strength or retention power of the resulting adhesive layer may decrease. If the value of *a* is more than the aforesaid upper limit, the viscosity of the composition may become exceedingly high, resulting in worsened workability, such as increased difficulty in stirring and mixing.

Component (A) is preferably an oily organopolysiloxan represented by the following formula (2) or (3). 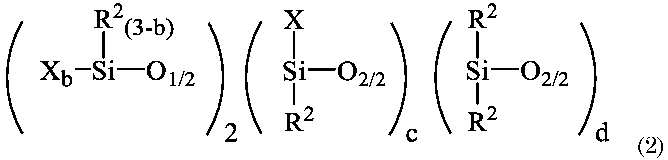 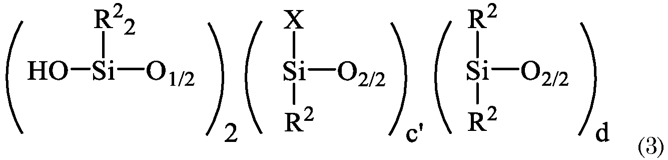 In each formula, R² is, independently of each other, a hydroxyl group or a substituted or unsubstituted monovalent hydrocarbon group having 1 to 10 carbon atoms and having no aliphatic unsaturated bond, X is an alkenyl group-containing organic group having 2 to 10 carbon atoms, b is an integer of 0 to 3, c is an integer of 0 or more, c' is an integer of 2 or more, 2b + c ≥ 2, d is an integer of 100 or more, and c + d and c' + d are integers such that the organopolysiloxane has the aforesaid viscosity. More preferably, 100 ≤ c + d ≤ 20,000 and 100 ≤ c' + d ≤ 20,000.

In formulas (2) and (3), R² is, independently of each other, a hydroxyl group or a substituted or unsubstituted monovalent hydrocarbon group having 1 to 10 carbon atoms and having no aliphatic unsaturated bond. Examples include the monovalent hydrocarbon groups excluding an alkenyl group-containing organic group defined for R¹ described above. Among these, methyl groups or phenyl groups are preferable, and methyl groups are particularly preferable. When a hydroxyl group is contained as R², the proportion of the number of hydroxyl groups to the total number of R² groups is preferably 10% or less, more preferably 0.001% to 5%, still more preferably 0.002% to 1%.

X represents an alkenyl group-containing monovalent organic group having 2 to 10 carbon atoms, preferably 2 to 8 carbon atoms, and may contain an oxygen atom. Specific examples include the alkenyl group-containing organic group defined for R¹ above. Among these, a vinyl group is preferable.

In formulas (2) and (3), b is an integer of 0 to 3, preferably 0 or 1, more preferably 1. c is an integer of 0 or more, preferably 0 to 500, more preferably 0 to 100, still more preferably 0 to 50, and c' is an integer of 2 or more, preferably 2 to 500, more preferably 2 to 100, still more preferably 2 to 50. d is an integer of 100 or more, preferably 500 to 15,000, more preferably 1,000 to 13,500, still more preferably 2,000 to 12,000. 2b + c is an integer of 2 or more, preferably 2 to 500, more preferably 2 to 100, still more preferably 2 to 50. c + d is an integer of 100 to 20,000, preferably 500 to 15,000, more preferably 1,000 to 13,500, still more preferably 2,000 to 12,000, and c' + d is an integer of 100 to 20,000, preferably 500 to 15,000, more preferably 1,000 to 13,500, still more preferably 2,000 to 12,000.

Examples of component (A) include, but are not limited to, the followings. In the following formulas, Me, Vi, and Ph represent methyl, vinyl, and phenyl groups, respectively. The bonding order of each siloxane unit shown in parentheses is not limited to the following. In each of the formulas below, the total number of siloxane repeating units is an average value. 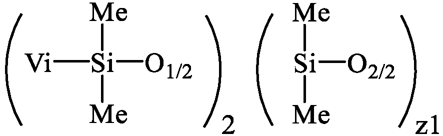 z1 is an integer such that the organopolysiloxane has the viscosity as described above, and preferably 100 ≤ z1 ≤ 20,000. 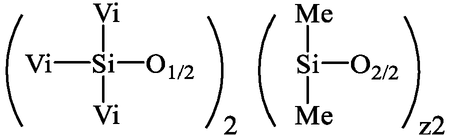 z2 is an integer such that the organopolysiloxane has the viscosity as described above, and preferably 100 ≤ z2 ≤ 20,000. 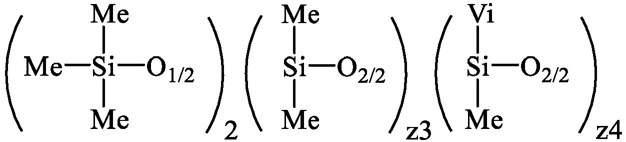 z3 and z4 are an integer such that the organopolysiloxane has the viscosity as described above, and preferably 100 ≤ z3 ≤ 19,000, 2 ≤ z4 ≤ 1,000, and 102 ≤ z3+z4 ≤ 20,000. 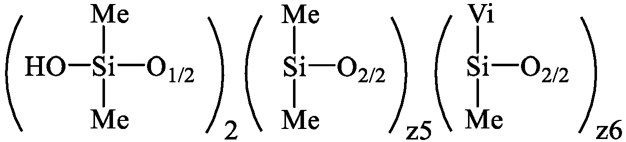 z5 and z6 are an integer such that the organopolysiloxane has the viscosity as described above, and preferably 100 ≤ z5 ≤ 19,000, 2 ≤ z6 ≤ 1,000, and 102 ≤ z5+z6 ≤ 20,000. 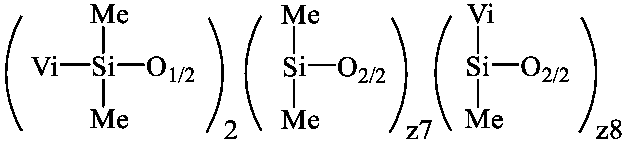 z7 and z8 are an integer such that the organopolysiloxane has the viscosity as described above, and preferably 100 ≤ z7 ≤ 19,000, 1 ≤ z8 ≤ 1,000 and 101 ≤ z7+z8 ≤ 20,000. 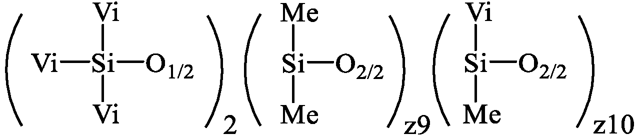 z9 and z10 are an integer such that the organopolysiloxane has the viscosity as described above, and preferably 100 ≤ z9 ≤ 19,000, 1 ≤ z10 ≤ 1,000 and 101 ≤ z9+z10 ≤ 20,000. 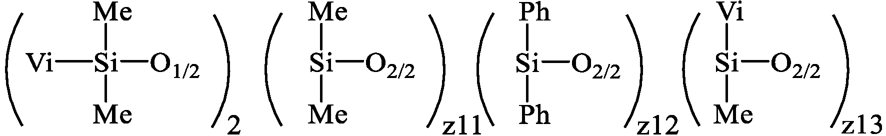 z11, z12 and z13 are an integer such that the organopolysiloxane has the viscosity as described above, and preferably 100 ≤ z11 ≤ 19,000, 1 ≤ z12 ≤ 6,000, 1 ≤ z13 ≤ 1,000 and 102 ≤ z11+z12+z13 ≤ 20,000. 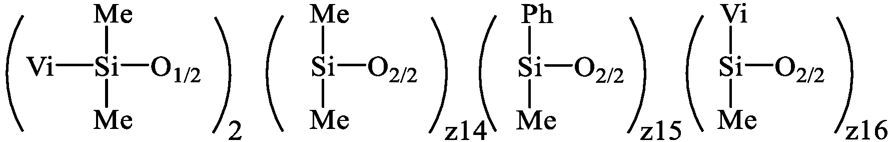 z14, z15 and z16 are an integer such that the organopolysiloxane has the viscosity as described above, and preferably 100 ≤ z14 ≤ 19,000, 1 ≤ z15 ≤ 6,000, 1 ≤ z16 ≤ 1,000 and 102 ≤ z14+z15+z16 ≤ 20,000.

The silicone composition of the present invention may further contain a linear organopolysiloxane (A') that does not have an alkenyl group and a SiH group. Having SiOH groups allows the organopolysiloxane (A') to undergo a condensation reaction with components (B) and (B') described below. The amount of component (A') is preferably 70% by mass or less, more preferably 50% by mass or less, or still more preferably 40% by mass or less, based on the total mass of components (A) and (A'). An amount more than 70% by mass as described above may cause the adhesive strength or retention power of the resulting adhesive layer to decrease. The lower limit of component (A') may be 0% by mass. Alternatively, the amount of component (A') is 1% to 70% by mass, preferably 3% to 50% by mass, or more preferably 5% to 40% by mass, which may improve the adhesive strength of the resulting adhesive layer.

Component (A') is, for example, represented by the following formula (1') or (1"). 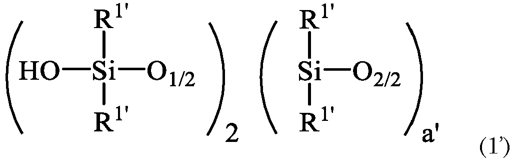 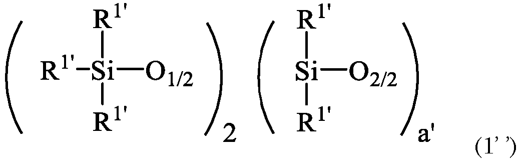 In the formula, R¹' is, independently of each other, a hydroxyl group or a substituted or unsubstituted monovalent hydrocarbon group having 1 to 10 carbon atoms, provided that R¹' is not an organic group containing an alkenyl group, and a' is an integer of 1 or more.

Component (A') may be an oil-type or raw rubber-type organopolysiloxane. The viscosity at 25 °C of an oil-type one is preferably 1,000 mPa -s or more, more preferably 10,000 mPa -s or more, particularly preferably 50,000 mPa -s or more. The viscosity of a raw rubber-type one is such that a viscosity of a solution dissolved the organopolysiloxane in toluene at a concentration of 30% by mass is preferably 1,000 to 200,000 mPa ·s, more preferably 5,000 to 150,000 mPa ·s, still more preferably 10,000 to 120,000 mPa ·s, particularly preferably 15,000 to 100,000 mPa ·s.

In formulas (1') and (1"), *a*' is an integer of 1 or more, and is only required to be a value such that the organopolysiloxane has the aforesaid viscosity. Preferably, *a*' is 100 to 20,000, more preferably 500 to 15,000, still more preferably 1,000 to 13,500, even more preferably 2,000 to 12,000. Examples of R^{1'} include the monovalent hydrocarbon groups excluding an alkenyl group-containing organic group defined for R¹ above. Among these, methyl groups or phenyl groups are preferable, and methyl groups are particularly preferable. When a hydroxyl group is contained as R^{1'}, the proportion of the number of hydroxyl groups to the total number of R^{1'} groups is preferably 10% or less, more preferably 0.001 to 5%, still more preferably 0.002 to 1%.

### [Component (B)]

Component (B) is an organopolysiloxane resin having one or more alkenyl groups in one molecule, having R³₃SiO_{1/2} units and SiO_{4/2} units and having a molar ratio of R³₃SiO_{1/2} units per SiO_{4/2} units, i.e. R³₃SiO_{1/2}/SiO_{4/2}, of 0.5 to 1.5, preferably 0.6 to 1.3, or more preferably 0.7 to 1.0. If the molar ratio is less than the aforesaid lower limit or more than the aforesaid upper limit, the adhesive strength or retention power of the resulting adhesive layer may decrease. The molar ratio of R³₃SiO_{1/2} unit per SiO_{4/2} unit may typically be determined by a known structural analysis method such as NMR analysis (hereinafter the same applies). The aforesaid component (B) may be used singly or in combination of two or more types.

R³ is, independently of each other, a substituted or unsubstituted monovalent hydrocarbon group having 1 to 10 carbon atoms. Examples thereof include alkyl groups preferably having 1 to 6 carbon atoms, such as a methyl group, ethyl group, propyl group, or butyl group; cycloalkyl groups preferably having 5 to 8 carbon atoms, such as a cyclohexyl group; aryl groups preferably having 6 to 10 carbon atoms such as a phenyl group or tolyl group; aralkyl groups preferably having 7 to 10 carbon atoms, such as a benzyl group; alkenyl groups preferably having 2 to 8 carbon atoms, such as a vinyl group, allyl group, or hexenyl group; and monovalent hydrocarbon groups having 1 to 10 carbon atoms, in which some or all of the hydrogen atoms bonded to carbon atoms are substituted with a hydroxy group, cyano group, halogen atom, alkoxy group, alkoxysilyl group, polyoxyalkylene group, epoxy group, carboxyl group, or the like, such as a hydroxypropyl group, cyanoethyl group, 3-chloropropyl group, 3,3,3-trifluoropropyl group, 3,3,4,4,5,5,6,6,6-nonafluorohexyl group, methoxypropyl group, ethoxypropyl group, or γ-glycidoxypropyl group. Among these, methyl, phenyl, and vinyl groups are preferable, and methyl and vinyl groups are particularly preferable.

The amount of alkenyl groups in component (B) is preferably 0.005 to 0.5 mol relative to 100 g of organopolysiloxane, more preferably 0.01 to 0.3 mol/100g, still more preferably 0.02 to 0.2 mol/100g, even more preferably 0.05 to 0.16 mol/100g. If the amount of alkenyl groups is less than the aforesaid lower limit or more than the aforesaid upper limit, the adhesive strength or retention power of the resulting adhesive layer may decrease.

Component (B) needs to have R³₃SiO_{1/2} units and SiO_{4/2} units. Component (B) may have either R³₂SiO_{2/2} units or R³SiO_{3/2} units or both (R³ is as defined above) within a range that does not impair the characteristics of the present invention. Preferably, component (B) has R³₂SiO_{2/2} units, and the molar ratio of R³₂SiO_{2/2} units/SiO_{4/2} units is 0.01 to 0.5, more preferably 0.02 to 0.4, still more preferably 0.03 to 0.3, even more preferably 0.05 to 0.25.

More preferably, component (B) is an organopolysiloxane resin composed of R⁴₃SiO_{1/2} units, R⁴₂R^{B}SiO_{1/2} units and SiO_{4/2} units, or an organopolysiloxane resin composed of R⁴₃SiO_{1/2} units, R⁴R^{B}SiO_{2/2} units and SiO_{4/2} units. R⁴ is a group represented by R³ as described above excluding alkenyl groups, and R⁵ is an alkenyl group having 2 to 10 carbon atoms.

In an organopolysiloxane resin composed of R⁴₃SiO_{1/2} units and R⁴₂R⁵SiO_{1/2} units (hereinafter collectively referred to as M units) as well as SiO_{4/2} units (hereinafter referred to as Q units), the molar ratios of each of the units are only required to be such that the molar ratio of M units/Q units is 0.5 to 1.5, preferably 0.6 to 1.3, more preferably 0.7 to 1.0.

In an organopolysiloxane resin composed of R⁴₃SiO_{1/2} units (hereinafter referred to as M units), R⁴R⁵SiO_{2/2} units (hereinafter referred to as D units), and SiO_{4/2} units (hereinafter referred to as Q units), the molar ratios for each of the units are only required to be such that the molar ratio of M units/Q units and the molar ratio of D units/Q units both satisfy the aforesaid ranges. That is, the ratio of M units/Q units is 0.5 to 1.5, preferably 0.6 to 1.3, more preferably 0.7 to 1.0, and the ratio of D units/Q units is 0.01 to 0.5, preferably 0.02 to 0.4, more preferably 0.03 to 0.3, still more preferably 0.05 to 0.25. The molar ratios of M units/Q units and D units/Q units may typically be determined by a known structural analysis method such as NMR analysis (hereinafter the same applies).

Component (B) may have a siloxane unit having a hydroxyl group bonded to a silicon atom (silanol group-containing unit) or a siloxane unit having an alkoxy group having 1 to 6 carbon atoms bonded to a silicon atom (alkoxy group-containing unit). The amount of silanol group-containing units is such that the amount of hydroxyl groups is 0.005 to 0.3 mol relative to 100 g of component (B), preferably 0.008 to 0.2 mol/100g, more preferably 0.01 to 0.1 mol/100g. If the amount of hydroxyl groups is more than 0.3 mol/100 g, the adhesive strength or retention power of the resulting adhesive layer may decrease or the curability may decrease. Further, the amount of alkoxy group-containing units is such that the amount of alkoxy groups is 0.3 mol or less relative to 100 g of component (B), preferably 0.2 mol/100g or less, or more preferably 0.1 mol/100g or less. If the amount of alkoxy groups is more than 0.3 mol/100 g, the adhesive strength or retention power of the resulting adhesive layer may decrease or the curability may decrease.

The amounts of contained SiOH groups and alkoxy groups may typically be determined by a known structural analysis method such as NMR analysis (hereinafter the same applies). Furthermore, the total amount of the silanol group-containing units and the alkoxy group-containing units, calculated as the sum of the amounts of contained hydroxyl groups and alkoxy groups, is, with respect to 100 g of component (B), 0.008 mol/100g to 0.3 mol/100g, preferably 0.01 mol/100g to 0.2 mol/100g, particularly preferably 0.015 mol/100g to 0.1 mol/100g. Having the hydroxyl groups or alkoxy groups allows component (B) to undergo a condensation reaction with component (A) or component (A') having hydroxyl groups, or with component (B') described below.

Examples of an alkoxy group having 1 to 6 carbon atoms include a methoxy group, ethoxy group, propoxy group, isopropoxy group, and phenoxy group. Further, examples of a silanol group-containing unit include an R³₂(OH)SiO_{1/2} unit, R³(OH)₂SiO_{1/2} unit, R³(OH)SiO_{2/2} unit, and (OH)SiO_{3/2} unit. Further, examples of an alkoxy group-containing unit include an R³₂(OR')SiO_{1/2} unit, R³(OR')₂SiO_{1/2} unit, R³(OR')SiO_{2/2} unit, and (OR')SiO_{3/2} unit (OR' is, independently of each other, an alkoxy group having 1 to 6 carbon atoms and is as exemplified above). In a case where component (B) is composed of R³₃SiO_{1/2} units, SiO_{4/2} units, and optionally R³₂SiO_{2/2} units, hydroxyl groups or alkoxyl groups may be bonded to silicon atoms derived from SiO_{4/2} units.

The weight average molecular weight of component (B) is preferably 1,000 to 10,000, more preferably 1,250 to 8,000, still more preferably 1,500 to 6,000, or even more preferably 1,750 to 5,500. If the weight average molecular weight is less than the aforesaid lower limit or more than the aforesaid upper limit, the adhesive strength or retention power of the resulting adhesive layer may decrease. The weight average molecular weight may typically be determined as a polystyrene-equivalent weight average molecular weight using gel permeation chromatography (GPC) analysis with toluene, tetrahydrofuran (THF), or the like as an eluent (hereinafter the same applies).

The silicone adhesive composition of the present invention may further contain an organopolysiloxane resin (B') that does not have alkenyl groups and SiH groups, containing R³'₃SiO_{1/2} units and SiO_{4/2} units and having a molar ratio of R³'₃SiO_{1/2} units/SiO_{4/2} units of 0.5 to 1.5, preferably 0.55 to 1.3, preferably 0.6 to 1.0. If the molar ratio is less than the aforesaid lower limit or more than the aforesaid upper limit, the adhesive strength or retention power of the resulting adhesive layer may decrease. The component (B') may be used singly or in combination of two or more types.

Component (B') organopolysiloxane resin containing no alkenyl group may be condensation reacted with component (A), component (B), and optionally component (A').

The amount of component (B') is preferably 50% by mass or less, more preferably 40% by mass or less, still more preferably 30% by mass or less, even more preferably 25% by mass or less, based on the total mass of components (B) and (B'). If the amount is more than 50% by mass, the adhesive strength or retention power of the resulting adhesive layer may decrease. The lower limit of component (B') may be 0% by mass. Alternatively, the amount of component (B') may be 1% to 50% by mass, preferably 2% to 40% by mass, more preferably 3% to 30% by mass, still more preferably 4% to 25% by mass, which may improve the adhesive strength of the resulting adhesive layer.

R³' is, independently of each other, a substituted or unsubstituted monovalent hydrocarbon group having 1 to 10 carbon atoms and having no aliphatic unsaturated bond. Examples include the monovalent hydrocarbon groups excluding an alkenyl group-containing organic group defined for R³ as described above. Among these, methyl groups or phenyl groups are preferable, and methyl groups are particularly preferable.

Component (B') needs to have R³'₃SiO_{1/2} units and SiO_{4/2} units, but may have either R³₂SiO_{2/2} units or R³'SiO_{3/2} units or both (R³' is as defined above) within a range that does not impair the characteristics of the present invention.

Component (B') may have a siloxane unit having a hydroxyl group bonded to a silicon atom (silanol group-containing unit) or a siloxane unit having an alkoxy group having 1 to 6 carbon atoms bonded to a silicon atom (alkoxy group-containing unit). The amount of silanol group-containing units is such that the amount of hydroxyl groups is, with respect to 100 g of component (B'), 0.005 to 0.3 mol/100g, preferably 0.008 to 0.25 mol/100g, more preferably 0.01 to 0.2 mol/100g. If the amount of contained hydroxyl groups is more than 0.3 mol/100 g, the adhesive strength or retention power of the resulting adhesive layer may decrease or the curability may decrease. Further, the amount of alkoxy group-containing units is such that the amount of alkoxy groups is, with respect to 100 g of component (B'), 0.3 mol/100g or less, preferably 0.2 mol/100g or less, or more preferably 0.1 mol/100g or less. If the amount of contained alkoxy groups is more than 0.3 mol/100 g, the adhesive strength or retention power of the resulting adhesive layer may decrease or the curability may decrease. Furthermore, the total amount of the silanol group-containing units and the alkoxy group-containing units, calculated as the sum of the amounts of contained hydroxyl groups and alkoxy groups, is, with respect to 100 g of component (B'), 0.008 to 0.3 mol/100g, preferably 0.01 to 0.25 mol/100g, particularly preferably 0.02 to 0.2 mol/100g. Having the hydroxyl groups or alkoxy groups allows component (B) to undergo a condensation reaction with component (A) or component (A') having hydroxyl groups, or with component (B).

Examples of an alkoxy group having 1 to 6 carbon atoms include a methoxy group, ethoxy group, propoxy group, isopropoxy group, and phenoxy group. Further, examples of silanol group-containing units include R³'₂(OH)SiO_{1/2} units, R³'(OH)₂SiO_{1/2} units, R³'(OH)SiO_{2/2} units, and (OH)SiO_{3/2} units. Further, examples of alkoxy group-containing units include R³'₂(OR')SiO_{1/2} units, R³'(OR')₂SiO_{1/2} units, R³'(OR')SiO_{2/2} units, and (OR')SiO_{3/2} units (OR' is, independently of each other, an alkoxy group having 1 to 6 carbon atoms and is as exemplified above). In a case where component (B') is composed of R³'₃SiO_{1/2} units and SiO_{4/2} units, hydroxyl groups or alkoxyl groups may be bonded to silicon atoms derived from SiO_{4/2} units.

The weight average molecular weight of component (B') is preferably 1,000 to 10,000, more preferably 1,250 to 8,000, still more preferably 1,500 to 7,000, or even more preferably 1,750 to 6,000.

The blending ratio of (A)/(B) of components (A) and (B) in the silicone adhesive composition of the present invention is 65/35 to 20/80 by mass. In particular, 60/40 to 22/78 is preferable, 55/45 to 25/75 is more preferable, 50/50 to 30/70 is still more preferable, and 49/51 to 33/67 is even more preferable. Herein, when both components (A') and (B') are not contained, (A)/(B) is preferably 60/40 to 25/75, more preferably 55/45 to 30/70, still more preferably 50/50 to 33/67, or even more preferably 49/51 to 35/65 by mass. When components (A') and/or (B') are contained, ((A) + (A'))/((B) + (B')) is preferably 60/40 to 25/75, more preferably 55/45 to 30/70, still more preferably 50/50 to 33/67, or even more preferably 49/51 to 35/65 by mass. If the blending ratio is less than the aforesaid lower limit or more than the aforesaid upper limit, the adhesive strength or retention power of the resulting adhesive layer may decrease.

Components (A) and (B) and optional components (A') and (B') may be partially or entirely subjected to a condensation reaction beforehand. Specifically, the hydroxyl groups of component (A) and the alkoxy groups or hydroxyl groups of component (B) may be subjected to a hydrolysis-condensation reaction or a condensation reaction beforehand to provide a condensation reaction product, which may then be mixed with the other components. Alternatively, the hydroxyl groups of component (A) and the alkoxy groups or hydroxyl groups of component (B') may be subjected to a hydrolysis-condensation reaction or a condensation reaction beforehand to provide a condensation reaction product, which may then be mixed with the other components. Alternatively, the hydroxyl groups of component (A') and the alkoxy groups or hydroxyl groups of component (B) may be subjected to a hydrolysis-condensation reaction or a condensation reaction beforehand to provide a condensation reaction product, which may then be mixed with the other components. Alternatively, the hydroxyl groups of component (A') and the alkoxy groups or hydroxyl groups of component (B') may be subjected to a hydrolysis-condensation reaction or a condensation reaction beforehand to provide a condensation reaction product, which may then be mixed with the other components. Alternatively, the hydroxyl groups of component (A), the hydroxyl groups of component (A'), and the alkoxy groups or hydroxyl groups of component (B) may be subjected to a hydrolysis-condensation reaction or a condensation reaction beforehand to provide a condensation reaction product, which may then be mixed with the other components. Alternatively, the hydroxyl groups of component (A), the hydroxyl groups of component (A'), and the alkoxy groups or hydroxyl groups of component (B') may be subjected to a hydrolysis-condensation reaction or a condensation reaction beforehand to provide a condensation reaction product, which may then be mixed with the other components. Alternatively, the hydroxyl groups of component (A), the alkoxy groups or hydroxyl groups of component (B), and the alkoxy groups or hydroxyl groups of component (B') may be subjected to a hydrolysis-condensation reaction or a condensation reaction beforehand to provide a condensation reaction product, which may then be mixed with the other components. Alternatively, the hydroxyl groups of component (A'), the alkoxy groups or hydroxyl groups of component (B), and the alkoxy groups or hydroxyl groups of component (B') may be subjected to a hydrolysis-condensation reaction or a condensation reaction beforehand to provide a condensation reaction product, which may then be mixed with the other components. Alternatively, the hydroxyl groups of component (A), the hydroxyl groups of component (A'), the alkoxy groups or hydroxyl groups of component (B), and the alkoxy groups or hydroxyl groups of component (B') may be subjected to a hydrolysis-condensation reaction or a condensation reaction beforehand to provide a condensation reaction product, which may then be mixed with the other components.

To perform the condensation reaction, a mixture of component (A) and/or component (A') as well as component (B) and/or component (B') dissolved in a solvent such as toluene is only required to be reacted at room temperature (25 °C) or while heated with one or more types of a condensation catalyst such as an acid, base, or organic acid metal salt, and then neutralized if necessary. In this case, the reaction is performed such that the amount of hydroxyl groups in the SiOH groups (silanol groups) in the condensation reaction product is 0.3 mol/100 g or less or particularly preferably 0.25 mol/100 g or less. Therefore, the silicone adhesive composition of the present invention may be a composition containing a product obtained through a condensation reaction between component (A) and/or component (A') as well as component (B) and/or component (B'), in addition to components (C) and (D) described below. Performing a condensation reaction beforehand may improve the adhesive strength, retention power, tack, or the like of the resulting cured product, or may suppress the transfer of silicone components to the adherend.

Herein, examples of basic condensation catalysts used in the aforesaid reaction include: metal hydroxides such as lithium hydroxide, sodium hydroxide, potassium hydroxide, or calcium hydroxide; carbonates such as sodium carbonate or potassium carbonate; bicarbonates such as sodium bicarbonate or potassium bicarbonate; metal alkoxides such as sodium methoxide or potassium butoxide; organometallic compounds such as butyllithium; potassium silanolate; and nitrogen compounds such as ammonia gas, aqueous ammonia, methylamine, ethylamine, propylamine, hexylamine, butanolamine, butylamine, dimethylamine, diethylamine, diethanolamine, dipropylamine, dibutylamine, dihexylamine, ethylamylamine, imidazole, propylhexylamine, trimethylamine, triethylamine, tripropylamine, tripropanolamine, pyridine, N-methylimidazole, methylpropylhexylamine, dodecylamine phosphate, tetramethylguanidine, or diazabicyclononane, or salts thereof. Among these, ammonia gas or aqueous ammonia is preferable.

The temperature of the condensation reaction may be set to 10 °C to 150 °C, but the condensation reaction is typically required to be performed at room temperature (25 °C) to the reflux temperature of the organic solvent. The reaction time is not particularly limited, but is preferably 0.5 to 20 hours or more preferably 1 to 16 hours.

Furthermore, after completion of the reaction, a neutralizing agent may be added to neutralize the basic catalyst, if necessary. Examples of a neutralizing agent include acidic gases such as hydrogen chloride or carbon dioxide; organic acids such as acetic acid, octylic acid, or citric acid; and mineral acids such as hydrochloric acid, sulfuric acid, or phosphoric acid. When ammonia gas, aqueous ammonia or an amine compound with a low boiling point is used as the alkaline catalyst, distillation may be performed by ventilating with an inert gas such as nitrogen.

### [Component (C)]

Component (C) is an organohydrogenpolysiloxane having three or more hydrogen atoms (SiH groups) bonded to silicon atoms in one molecule. The organohydrogenpolysiloxane (C) may be used singly or in combination of two or more types. In component (C), the proportion of the total number of hydrogen atoms bonded to silicon atoms to the total number of hydrogen atoms and groups bonded to silicon atoms is 20% to 50%. The average degree of polymerization of the siloxane of component (C) is 100 or less, preferably 3 to 100, more preferably 4 to 70, still more preferably 5 to 50, or even more preferably 6 to 30.

The SiH groups in component (C) undergo an addition reaction with the alkenyl groups in components (A) and (B) to cure and form an adhesive layer. The amount of component (C) is such that the ratio of the total number of SiH groups in component (C) to the total number of alkenyl groups in components (A) and (B) is 0.1 to 2.0, preferably 0.12 to 1.5, more preferably 0.15 to 0.95, still more preferably 0.2 to 0.8, or even more preferably 0.3 to 0.7. The amount is, with respect to a total of 100 parts by mass of components (A) and (B) as well as optional components (A') and (B'), 0.1 to 10.0 parts by mass, preferably 0.5 to 7.0 parts by mass, or more preferably 1.0 to 5.0 parts by mass. If the amount or number ratio is less than the lower limit, the adhesive strength or retention power of the resulting adhesive layer may decrease. If the amount or number ratio is more than the aforesaid upper limit, the adhesive strength of the resulting adhesive layer may decrease or the usable time of the treatment bath to may be shortened.

Component (C) may be linear, branched, or cyclic, or may be a mixture thereof. Examples of component (C) include polymers or copolymers having at least one of R⁶₂HSiO_{1/2} units, R⁶HSiO_{2/2} units, and HSiO_{3/2} units, and optionally further having at least one of R⁶₃SiO_{1/2} units, R⁶₂SiO_{2/2} units, R⁶SiO_{3/2} units, and SiO_{4/2} units (wherein, R⁶ is, independently of each other, a hydroxyl group or a substituted or unsubstituted monovalent hydrocarbon group having 1 to 10 carbon atoms and having no aliphatic unsaturated bond). The total number of R⁶₂HSiO_{1/2} units or R⁶HSiO_{2/2} units in one molecule is 3 to 100, preferably 4 to 70, more preferably 5 to 50, still more preferably 6 to 30. If the number of SiH groups is less than the aforesaid lower limit or more than the aforesaid upper limit, the curability may decrease or the adhesive strength or retention power of the resulting adhesive layer may decrease.

The proportion of the total number of hydrogen atoms bonded to silicon atoms to the total number of hydrogen atoms and R⁶ groups bonded to silicon atoms (hereinafter referred to as the proportion of SiH groups) is 20% to 50%, preferably 25% to 49%, or more preferably 30% to 48%. If the proportion of SiH groups is less than the aforesaid lower limit or more than the aforesaid upper limit, the curability may decrease or the adhesive strength or retention power of the resulting adhesive layer may decrease.

The aforesaid R⁶ is, independently of each other, a hydroxyl group or a substituted or unsubstituted monovalent hydrocarbon group having 1 to 10 carbon atoms and having no aliphatic unsaturated bond. Examples of monovalent hydrocarbon groups include alkyl groups preferably having 1 to 6 carbon atoms, such as a methyl group, ethyl group, propyl group, or butyl group; cycloalkyl groups preferably having 5 to 8 carbon atoms, such as a cyclohexyl group; aryl groups preferably having 6 to 10 carbon atoms, such as a phenyl group or tolyl group; aralkyl groups preferably having 7 to 10 carbon atoms, such as a benzyl group; and monovalent hydrocarbon groups having 1 to 10 carbon atoms, in which some or all of the hydrogen atoms bonded to carbon atoms are substituted with a hydroxy group, cyano group, halogen atom, alkoxy group, alkoxysilyl group, polyoxyalkylene group, epoxy group, carboxyl group, or the like, such as a hydroxypropyl group, cyanoethyl group, 3-chloropropyl group, 3,3,3-trifluoropropyl group, 3,3,4,4,5,5,6,6,6-nonafluorohexyl group, methoxypropyl group, ethoxypropyl group, or γ-glycidoxypropyl group. Among these, R⁶ is preferably an alkyl group or an aryl group, or more preferably a methyl group, an ethyl group, a propyl group, or a phenyl group. R⁶ may be a hydroxyl group, but the proportion of the number of hydroxyl groups to the total number of R⁶ groups is preferably 10% or less, more preferably 5% or less, or still more preferably 1% or less. The lower limit is not limited, but the smaller the amount of hydroxyl groups in component (C), the better, and the hydroxyl group may not be contained.

Component (C) has a viscosity at 25 °C of 1 to 2,000 mPa -s or particularly preferably 2 to 1,000 mPa ·s. If the viscosity is less than the aforesaid lower limit or more than the aforesaid upper limit, the curability may decrease or the adhesive strength or retention power of the resulting adhesive layer may decrease.

Component (C) is preferably a linear organohydrogenpolysiloxane represented by the following formula (4), 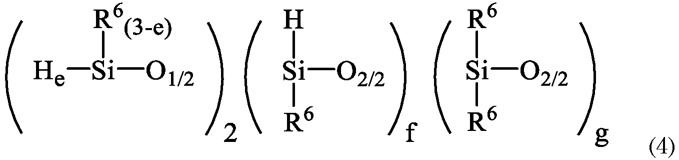 wherein R⁶ is, independently of each other, a hydroxyl group or a substituted or unsubstituted, monovalent hydrocarbon group having 1 to 10 carbon atoms and having no aliphatic unsaturated bond, e is 0 or 1, f and g are integers satisfying equations of 1 ≤ f ≤ 98, 0 ≤ g ≤ 60, 3 ≤ 2e + f ≤ 100, and 3 ≤ f + g + 2 ≤ 100.

In the formula (4), R⁶ is, independently of each other, a hydroxyl group or a substituted or unsubstituted monovalent hydrocarbon group having 1 to 10 carbon atoms and having no aliphatic unsaturated bond, and is as described above. R⁶ is preferably an alkyl group or an aryl group, or more preferably a methyl group, an ethyl group, a propyl group, or a phenyl group. In the formula (4), R⁶ may be a hydroxyl group, but the proportion of the number of hydroxyl groups to the total number of R⁶ groups is preferably 10% or less, more preferably 5% or less, or more preferably 1% or less. There is no lower limit, but the smaller the amount of hydroxyl groups, the better, and hydroxyl group may not be contained.

For e, f, and g, f is an integer of 1 to 98, preferably 3 to 80, more preferably 4 to 70, still more preferably 5 to 50, even more preferably 6 to 30; g is an integer of 0 to 60, preferably 0 to 30, more preferably 0 to 20, still more preferably 0 to 10; 2e + f is an integer of 3 to 100, preferably 4 to 70, more preferably 5 to 50, still more preferably 6 to 30; and f + g + 2 is an integer of 3 to 100, preferably 4 to 70, more preferably 5 to 50, still more preferably 6 to 30.

In the present invention, crosslinking proceeds through a hydrosilylation reaction between components (A), (B), and (C). Among these, component (C) has a low degree of polymerization and a high proportion of SiH groups. Further, the ratio of the total number of SiH groups in component (C) to the total number of alkenyl groups in components (A) and (B) is 0.1 to 2.0, preferably 0.12 to 1.5, more preferably 0.15 to 0.95, still more preferably 0.2 to 0.8, even more preferably 0.3 to 0.7. The ratio of the number of SiH groups to the number of alkenyl groups is smaller than in the composition of typical addition-curing silicone adhesives. This prevents the silicone adhesive layer from being uniformly crosslinked. More specifically, a three-dimensional crosslinked structure is formed by a portion of components (A), (B), and (C). Further, a portion of components (B) and (C) react to form an organopolysiloxane with a high molecular weight in which multiple molecules of component (B) reacted with one molecule of component (C). Furthermore, since the ratio of the number of SiH groups to the number of alkenyl groups is small, a portion of components (A) and (B) remain unreacted. That is, a three-dimensional crosslinked structure, an organopolysiloxane structure with a high molecular weight, and an adhesive layer obtained from a mixture of unreacted components (A) and (B) are formed. This is assumed to allow the high adhesive strength and retention power at room temperature to be maintained even at high temperatures.

Examples of component (C) include, but are not limited to, the following. In the formulas below, Me and Ph represent methyl and phenyl groups, respectively. The bonding order of each siloxane unit shown in parentheses is not limited to the following. In each of the formulas below, the total number of siloxane repeating units is an average value. 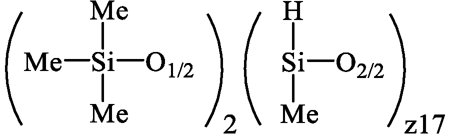 wherein 5 ≤ z17+2 ≤ 100. 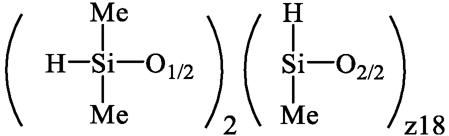 wherein 3 ≤ z18+2 ≤ 100. 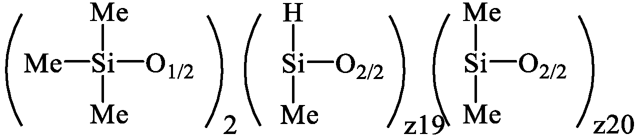 wherein 3 ≤ z19 ≤ 97, 1 ≤ z20 ≤ 60, 6 ≤ z19+z20+2 ≤ 100 and Z is the number satisfying the proportion of SiH groups is 20 % to 50 %. 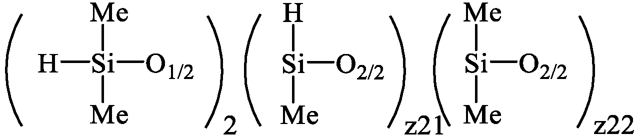 wherein 1 ≤ z21 ≤ 97, 1 ≤ z22 ≤ 60, 4 ≤ z21+z22+2 ≤ 100 and Z is the number satisfying the proportion of SiH groups is 20 % to 50 %. 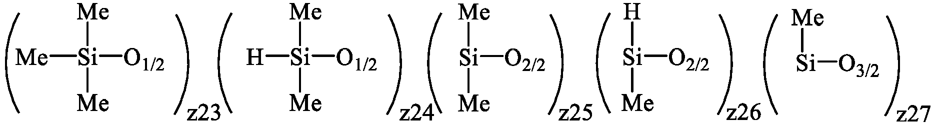 wherein 0 ≤ z23, 0 ≤ z24, 0 ≤ z25, 3 ≤ z26 and 1 ≤ z27 and Z is the number satisfying the proportion of SiH groups is 20 % to 50 % and satisfying a siloxane average degree of polymerization below 100. 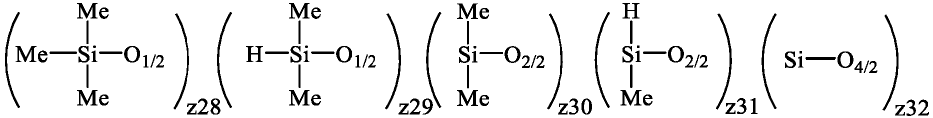 wherein 0 ≤ z28, 0 ≤ z29, 0 ≤ z30, 3 ≤ z31 and 1 ≤ z32 and Z is the number satisfying the proportion of SiH groups is 20 % to 50 % and satisfying a siloxane average degree of polymerization below 100. 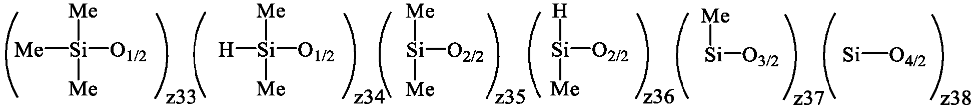 wherein 0 ≤ z33, 0 ≤ z34, 0 ≤ z35, 3 ≤ z36, 1 ≤ z37 and 1 ≤ z38 and Z is the number satisfying the proportion of SiH groups is 20 % to 50 % and satisfying a siloxane average degree of polymerization below 100. 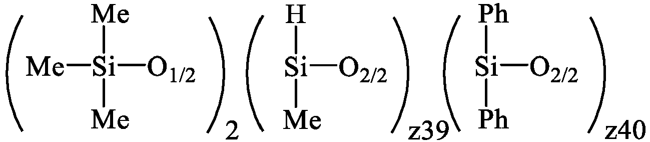 wherein 3 ≤ z39 ≤ 97, 1 ≤ z40 ≤ 60 and 6 ≤ z39+z40+2 ≤ 100 and Z is the number satisfying the proportion of SiH groups is 20 % to 50 %. 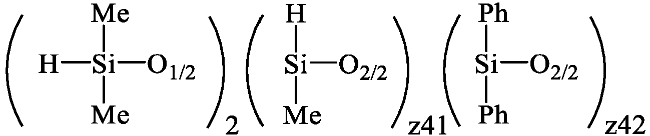 wherein 1 ≤ z41 ≤ 97, 1 ≤ z42 ≤ 60 and 4 ≤ z41+z42+2 ≤ 100 and Z is the number satisfying the proportion of SiH groups is 20 % to 50 %. 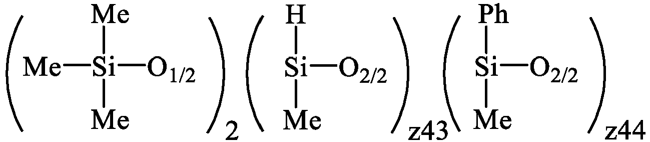 wherein 3 ≤ z43 ≤ 97, 1 ≤ z44 ≤ 60 and 6 ≤ z43+z44+2 ≤ 100 and Z is the number satisfying the proportion of SiH groups is 20 % to 50 %. 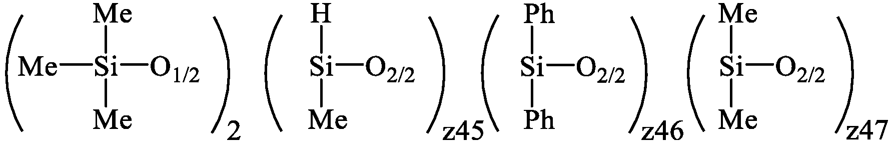 wherein 3 ≤ z45 ≤ 96, 1 ≤ z46 ≤ 60, 1 ≤ z47 ≤ 60 and 7 ≤ z45+z46+z47+2 ≤ 100 and Z is the number satisfying the proportion of SiH groups is 20 % to 50 %. 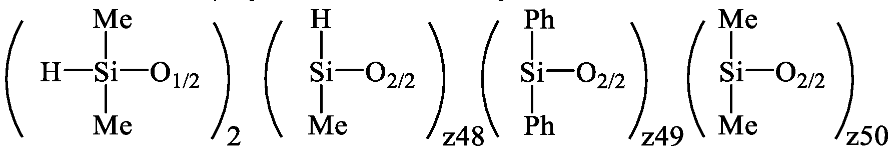 wherein 1 ≤ z48 ≤ 96, 1 ≤ z49 ≤ 60, 1 ≤ z50 ≤ 60 and 5 ≤ z48+z49+z50+2 ≤ 100 and Z is the number satisfying the proportion of SiH groups is 20 % to 50 %.

The silicone composition of the present invention may further contain an organohydrogenpolysiloxane (C') having three or more hydrogen atoms bonded to silicon atoms (SiH groups) in one molecule and a proportion of the total number of hydrogen atoms bonded to silicon atoms to the total number of hydrogen atoms and groups bonded to silicon atoms in the component of less than 20%. The average degree of polymerization of the siloxane of component (C') is favorably 100 or less, and is preferably 3 to 100, more preferably 4 to 70, still more preferably 5 to 50, even more preferably 6 to 30. The organohydrogenpolysiloxane (C') may be used singly or in combination of two or more types.

The SiH groups in component (C') undergo an addition reaction with the alkenyl groups in components (A) and (B) to cure and form an adhesive layer. The amount of component (C') is such that the ratio of the total number of SiH groups in component (C') to the total number of alkenyl groups in components (A) and (B) is 1.0 or less, preferably 0.8 or less, or more preferably 0.6 or less. If the ratio is more than 1.0 as described above, the adhesive strength of the resulting adhesive layer may decrease or the usable time of the treatment bath may be shortened. The lower limit of the amount of component (C') may be 0. The ratio of the total number of SiH groups in component (C') to the total number of alkenyl groups in components (A) and (B) is preferably 0.01 to 1.0, more preferably 0.03 to 0.8, or still more preferably 0.05 to 0.6, which may improve curability, or improve the adhesive strength or retention power of the resulting adhesive layer.

Component (C') may be linear, branched, or cyclic, or may be a mixture thereof. Examples of component (C') include polymers or copolymers having at least one of R⁶₂HSiO_{1/2} units, R⁶HSiO_{2/2} units, and HSiO_{3/2} units, and optionally further having at least one of R⁶'₃SiO_{1/2} units, R⁶₂SiO_{2/2} units, R⁶'SiO_{3/2} units, and SiO_{4/2} units (wherein, R^{6'} is, independently of each other, a hydroxyl group or a substituted or unsubstituted monovalent hydrocarbon group having 1 to 10 carbon atoms and having no aliphatic unsaturated bond). The total number of R^{6'}₂HSiO_{1/2} units or R^{6'}HSiO_{2/2} units in one molecule is 3 to 50, preferably 4 to 45, or more preferably 5 to 40.

In component (C'), the proportion of the total number of hydrogen atoms bonded to silicon atoms to the total number of hydrogen atoms and R^{6'} groups bonded to silicon atoms (hereinafter referred to as the proportion of SiH groups) is less than 20%, preferably 1% or more and less than 20%, more preferably 5% or more and less than 20%, or still more preferably 10% or more and less than 20%.

The R^{6'} is, independently of each other, a hydroxyl group or a substituted or unsubstituted monovalent hydrocarbon group having 1 to 10 carbon atoms and having no aliphatic unsaturated bond. Examples include the monovalent hydrocarbon groups defined for R⁶ described above. Among these, methyl groups or phenyl groups are preferable, and methyl groups are particularly preferable. R^{6'} may be a hydroxyl group, but the proportion of the number of hydroxyl groups to the total number of R^{6'} is preferably 10% or less, more preferably 5% or less, still more preferably 1% or less. The lower limit is not limited, but the smaller the amount of hydroxyl groups in component (C'), the better, and a hydroxyl group may not be contained.

Component (C') has a viscosity at 25 °C of 1 to 2,000 mPa ·s or particularly preferably 2 to 1,000 mPa .s.

Component (C') is preferably a linear organohydrogen polysiloxane represented by the following formula (4') .

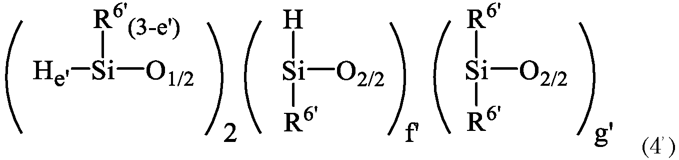

In the formula, R^{6'} is, independently of each other, a hydroxyl group or a substituted or unsubstituted monovalent hydrocarbon group having 1 to 10 carbon atoms and having no aliphatic unsaturated bond. e' is 0 or 1, f and g' are integers of 1 ≤ f ≤ 50, 1 ≤ g' ≤ 80, 3 ≤ 2e'+f ≤ 50 and 3 ≤ f+g'+2 ≤ 100.

In the formula (4'), R^{6'} is, independently of each other, a hydroxyl group or a substituted or unsubstituted monovalent hydrocarbon group having 1 to 10 carbon atoms and having no aliphatic unsaturated bond, and is as described above.

For e', f, and g' , f is an integer of 1 to 50, preferably 2 to 45, or more preferably 3 to 40; g' is an integer of 1 to 80, preferably 2 to 70, or more preferably 3 to 60; 2e' + f is an integer of 3 to 50, preferably 4 to 45, or more preferably 5 to 40; and f + g' + 2 is an integer of 3 to 100, preferably 4 to 80, or more preferably 5 to 60.

### [Component (D)]

Component (D) is a catalyst for promoting the addition reaction between components (A) and (B) as well as component (C) and optional component (C'). The catalyst is only required to promote the so-called hydrosilylation reaction, and a known platinum group metal-based catalyst may be used. Examples of platinum group metal-based catalysts include platinum-based, palladium-based, rhodium-based, ruthenium-based, and iridium-based catalysts, and among these, platinum-based catalysts are particularly preferable. Examples of platinum-based catalysts include chloroplatinic acid, alcohol or aldehyde solutions of chloroplatinic acid, reaction products from reacting chloroplatinic acid with alcohol, and complexes of chloroplatinic acid or platinum with various olefins or vinylsiloxanes. Component (D) may be used singly or in combination of two or more types.

The amount of component (D) is only required to be a catalytic amount. A catalytic amount is an effective amount that promotes the addition reaction between components (A), (B), and (C), as well as optional component (C'). In order to obtain a favorable adhesive layer, the amount of component (D) is 1 to 5,000 ppm, preferably 5 to 500 ppm, or particularly preferably 10 to 200 ppm by mass of a platinum group metal, relative to the total mass of components (A), (B) and (C) and optional components (A'), (B') and (C'). If the amount is less than 1 ppm, the curability may be poor or the crosslink density of the resulting adhesive layer may decrease, resulting in a decrease in adhesive strength or retention power. If the amount is more than 5,000 ppm, the usable time of the treatment bath may be shortened.

### [Component (E)]

A component (E) is an optional addition reaction inhibitor. Component (E) may be added before heat curing, for example, when preparing a silicone adhesive composition or when coating a substrate with an adhesive composition, to prevent the thickening or gelation of the treatment solution containing the adhesive composition. Examples thereof include various organic nitrogen compounds, organic phosphorus compounds, organic silicon compounds, acetylene-based compounds, unsaturated carboxylic acid esters, oxime compounds, and the like.

More specific examples thereof include acetylene-based alcohols such as 3-methyl-1-butyn-3-ol, 3,5-dimethyl-1-hexyn-3-ol, 3-methyl-1-pentyn-3-ol, 2-phenyl-3-butyn-2-ol, or 1-ethynylcyclohexanol; acetylene-based compounds such as 3-methyl-3-penten-1-yne or 3,5-dimethyl-3-hexen-1-yne; reaction products from reacting acetylene-based compounds with chlorosilane, alkoxysilane, siloxane, or hydrogensilane, such as 3-methyl-3-trimethylsiloxy-1-butyne, 3-methyl-3-trimethylsiloxy-1-pentyne, 3,5-dimethyl-3-trimethylsiloxy-1-hexyne, 1-ethynyl-1-trimethylsiloxycyclohexane, or bis(2,2-dimethyl-3-butynoxy)dimethylsilane; vinyl siloxanes such as 1,3,5,7-tetramethyl-1,3,5,7-tetravinylcyclotetrasiloxane or 1,1,3,3-tetramethyl-1,3-divinyldisiloxane; unsaturated carboxylic acid esters such as diallyl maleate, dimethyl maleate, diallyl fumarate, or diethyl fumarate; organic nitrogen compounds such as benzotriazole; and other organic phosphorus compounds or oxime compounds. Component (E) may be used singly or in combination of two or more types.

The amount of component (E) is in a range from 0 to 8.0 parts by mass relative to a total of 100 parts by mass of components (A), (B) and (C) as well as optional components (A'), (B') and (C'). When component (E) is comprised, the amount is preferably in a range from 0.01 to 8.0 parts by mass, more preferably in a range from 0.05 to 5.0 parts by mass. If the amount is more than 8 parts by mass, the curability of the resulting composition may be poor. When the amount is 0.01 part by mass or more, a reaction control effect is sufficiently exhibited.

### [Other optional components]

Other components may be optionally added to the silicone adhesive composition of the present invention in addition to each of the components above. The amount of other component is only required to be the same as those of conventionally known silicone adhesives and to be appropriately adjusted within a range that does not impair the effects of the present invention. Examples thereof include non-reactive organopolysiloxanes such as polydimethylsiloxane or polydimethyldiphenylsiloxane; antioxidants such as a phenol-based, quinone-based, amine-based, phosphorus-based, phosphite-based, sulfur-based, or thioether-based antioxidant; light stabilizers such as a triazole-based or benzophenone-based light stabilizer; flame retardants such as a phosphate ester-based, halogen-based, phosphorus-based, and antimony-based flame retardant; antistatic agents such as a cationic surfactant, anionic surfactant, or nonionic-based surfactant; dyes; pigments; defoamers; fillers; leveling agents; adhesion improvers such as a silane coupling agent; thickeners; photoinitiators; reactive diluents; and solvents for reducing viscosity during coating.
Examples of solvents that may be used include: aromatic hydrocarbon-based solvents such as toluene or xylene; aliphatic hydrocarbon-based solvents such as hexane, heptane, octane, isooctane, decane, cyclohexane, methylcyclohexane, or isoparaffin; hydrocarbon-based solvents such as industrial gasoline, petroleum benzine, or solvent naphtha; ketone-based solvents such as acetone, methyl ethyl ketone, 2-pentanone, 3-pentanone, 2-hexanone, 2-heptanone, 4-heptanone, methyl isobutyl ketone, diisobutyl ketone, acetonylacetone, or cyclohexanone; ester-based solvents such as ethyl acetate, propyl acetate, isopropyl acetate, butyl acetate, or isobutyl acetate; ether-based solvents such as diethyl ether, dipropyl ether, diisopropyl ether, dibutyl ether, 1,2-dimethoxyethane, or 1,4-dioxane; solvents having ester and ether moieties such as 2-methoxyethyl acetate, 2-ethoxyethyl acetate, propylene glycol monomethyl ether acetate, or 2-butoxyethyl acetate; and siloxane-based solvents such as hexamethyldisiloxane, octamethyltrisiloxane, octamethylcyclotetrasiloxane, decamethylcyclopentasiloxane, tris(trimethylsiloxy)methylsilane, or tetrakis(trimethylsiloxy)silane. These may be used singly or in combination of two or more types as appropriate. When the solvent is comprised, the amount is preferably 10 to 20,000 parts by mass, more preferably 25 to 10,000 parts by mass, particularly preferably 50 to 1,000 parts by mass, relative to a total of 100 parts by mass of components (A), (B) and (C) as well as optional components (A'), (B') and (C'). Further, the silicone adhesive composition of the present invention may be a solvent-free type.

### [Method for producing the composition]

The silicone adhesive composition of the present invention may be prepared by mixing and dissolving the aforesaid components. In terms of pot life, the preferable preparation method is to mix components (A), (B) and (C) as well as optional components (A'), (B') and (C'), and if necessary, component (E), and other optional components uniformly beforehand and, then, add component (D) immediately before use. Further, as described above, component (A) and/or optional component (A') as well as component (B) and/or optional component (B') may be subjected to a condensation reaction beforehand.

A silicone adhesive layer may be obtained by coating various substrates with the silicone adhesive composition of the present invention and curing the silicone adhesive composition under specified conditions. The silicone adhesive composition of the present invention may be suitably used, for example, as an adhesive tape, an adhesive sheet, or an adhesive film having a substrate and an adhesive layer composed of a cured product of the composition layered on at least one side of the substrate.

### [Substrate]

As the substrate, paper, plastic film formed from plastic, glass, metal, fabric, and the like are selected. Examples of paper include fine paper, coated paper, art paper, glassine paper, polyethylene laminated paper, craft paper, Japanese paper, and synthetic paper. Examples of plastic films include polyethylene film, polypropylene film, polyester film, polyimide film, polyamide film, polyvinyl chloride film, polyvinylidene chloride film, polyvinyl alcohol film, polycarbonate film, polytetrafluoroethylene film, polystyrene film, ethylene-vinyl acetate copolymer film, ethylene-vinyl alcohol copolymer film, cellulose triacetate film, polyether ether ketone film, and polyphenylene sulfide film. The thickness and type of glass are not particularly limited, and the glass may be chemically tempered. Glass fiber may also be used and may be used singly or in combination with other resins. Examples of fabric include natural fiber fabric, synthetic fiber fabric, and artificial leather, and examples of metals include aluminum foil, copper foil, gold foil, silver foil, and nickel foil.

In order to further improve the adhesion between these substrates and the silicone adhesive layer, primer-treated, corona-treated, etched, sandblasted, or plasma-treated substrates may be used.

The surface of the adhesive layer of the substrate and the opposite surface thereof may be surface-treated to prevent scratches, stains, fingerprint stains, glare, reflection, static electricity, and the like. The substrate may be coated with the adhesive layer and then subjected to the aforesaid surface treatments, or the substrate may be surface-treated and then coated with the adhesive layer.

Examples of anti-scratch treatments (hard coating treatments) include treatments with hard coating agents such as an acrylate-based, silicone-based, oxetane-based, inorganic-based, or organic-inorganic hybrid-based hard coating agent.

Examples of stain-proofing treatments include treatments with stain-proofing agents such as a fluorine-based, silicone-based, ceramic-based, or photocatalyst-based stain-proofing agent.

Examples of anti-reflection treatments include wet treatments with anti-reflection agents such as a fluorine-based or silicone-based anti-reflection agent and dry treatments such as treatments with vapor or sputter deposition. Examples of anti-static treatments include treatments with anti-static agents such as a surfactant-based, silicone-based, organoboron-based, conductive polymer-based, metal oxide-based, or vapor-deposited metal-based anti-static agent.

### [Method for preparing adhesive tape and adhesive film]

The coating method is only required to be a known coating method, and examples thereof include using a comma coater, lip coater, roll coater, die coater, knife coater, blade coater, rod coater, bar coater, kiss coater, gravure coater, screen coating, dip coating, or cast coating.

The amount of coating is set appropriately depending on the application, but typically is an amount such that the silicone adhesive layer has a thickness after curing of 1 to 2,000 µm, preferably 2 to 1,000 µm, or particularly preferably 3 to 500 µm.

The curing conditions for the silicone adhesive composition may be set to 70 °C to 250 °C for 10 seconds to 10 minutes, but are not limited thereto.

The adhesive tape or adhesive film of the present invention may be manufactured by directly coating a substrate with the silicone adhesive composition of the present invention as described above and curing the composition to form a silicone adhesive layer, and may also be manufactured by a transfer method consisting of coating a release-coated release film or release paper with the composition, curing the composition to form a silicone adhesive layer, and then affixing the silicone adhesive layer to a substrate.

### [Applications of adhesive tape and adhesive film]

The adhesive tape or adhesive film manufactured using the silicone adhesive composition of the present invention is useful for, but is not particularly limited to, applications in high-temperature environments. Examples thereof include heat-resistant tapes, electrical tapes, heat seal tapes, plating masking tapes, and heat treatment masking tapes. Specific applications include protecting adherends, masking, temporarily fixing, fixing during transportation, and splicing in the manufacturing process of electrical components or semiconductor components. The adherends are not particularly limited, and examples thereof may include: metals such as stainless steel, copper, or iron, and these metals with plated or rust-proofed surfaces; ceramics such as glass, tempered or stain-proofed glass, or porcelain; resins such as polytetrafluoroethylene, polyimide, epoxy resin, novolac resin, or polarizers; and composites formed by combining two or more of these.

### EXAMPLES

The present invention will be explained below in further detail with reference to a series of the Examples and the Comparative Examples, though the present invention is in no way limited by these Examples. In the following descriptions, the term "part" refers to "part by mass".

The characteristic value indicates the value determined by the following test method. In each example, Me indicates a methyl group, Vi indicates a vinyl group and Ph indicates a phenyl group.

### [Preparation of silicone adhesive base composition]

### <Preparation Example 1>

An (A-1) organopolysiloxane (52 parts by mass) represented by the following formula, having a viscosity at 25 °C of 58,000 mPa -s as dissolved in toluene at a concentration of 30% by mass, capped at both ends of the molecular chain with vinyl groups, and having an amount of alkenyl groups of 0.0008 mol/100 g, 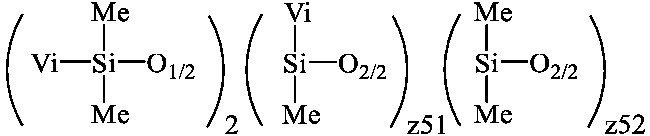 wherein z51 and z52 are the number satisfying the aforesaid viscosity and vinyl group amount,
the (B-1) toluene solution (96 parts by mass) containing 50% by mass of an organopolysiloxane composed of Me₃SiO_{1/2} units, MeViSiO_{2/2} units, and SiO_{4/2} units and having hydroxyl groups bonded to silicon atoms (Me₃SiO_{1/2} units/MeViSiO_{2/2} units/SiO_{4/2} units (molar ratio) = 0.79/0.13/1.0; weight average molecular weight = 3,400; amount of contained alkenyl groups = 0.123 mol/100 g; amount of contained hydroxyl groups bonded to silicon atoms = 0.031 mol/100 g; and with the hydroxyl groups bonded to silicon atoms derived from SiO_{4/2} units), and
(E-1) ethynylcyclohexanol (0.2 part by mass) were mixed, and toluene (52 parts by mass) was added to the mixture to obtain a silicone adhesive base composition I containing the active component of approximately 50% by mass.

### <Preparation Example 2>

The (A-1) organopolysiloxane described in Preparation Example 1 (42.5 parts by mass), capped at both ends of the molecular chain having vinyl groups and having an amount of alkenyl groups of 0.0008 mol/100 g,
the (B-1) toluene solution described in Preparation Example 1 (115 parts by mass) containing 50% by mass of an organopolysiloxane composed of Me₃SiO_{1/2} units, MeViSiO_{2/2} units, and SiO_{4/2} units and having hydroxyl groups bonded to silicon atoms, and
(E-1) ethynylcyclohexanol (0.2 part by mass) were mixed, and toluene (42.5 parts by mass) was added to the mixture to obtain a silicone adhesive base composition II containing the active component of approximately 50% by mass.

### <Preparation Example 3>

The (A-1) organopolysiloxane (35.5 parts by mass) described in Preparation Example 1, capped at both ends of the molecular chain having vinyl groups and having an amount of alkenyl groups of 0.0008 mol/100 g,
the (B-1) toluene solution described in Preparation Example 1 (129 parts by mass) containing 50% by mass of an organopolysiloxane composed of Me₃SiO_{1/2} units, MeViSiO_{2/2} units, and SiO_{4/2} units and having hydroxyl groups bonded to silicon atoms, and
(E-1) ethynylcyclohexanol (0.2 part by mass) were mixed, and toluene (35.5 parts by mass) was added to the mixture to obtain a silicone adhesive base composition III containing the active component of approximately 50% by mass.

### <Preparation Example 4>

An (A-2) organopolysiloxane (45 parts by mass) represented by the following formula, having a viscosity at 25 °C of 25,000 mPa -s as dissolved in toluene at a concentration of 30% by mass, capped at both ends of the molecular chain having vinyl groups, having an amount of alkenyl groups of 0.0010 mol/100 g, and having a proportion of the total number of phenyl groups to the total number of groups bonded to silicon atoms of 1.0%, 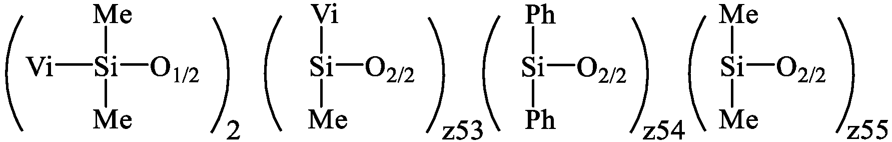 wherein z53, z54 and z55 are numbers satisfying the aforesaid viscosity, vinyl group content and phenyl group content,
the (B-1) toluene solution described in Preparation Example 1 (110 parts by mass) containing 50% by mass of an organopolysiloxane composed of Me₃SiO_{1/2} units, MeViSiO_{2/2} units, and SiO_{4/2} units and having hydroxyl groups bonded to silicon atoms, and
(E-1) ethynylcyclohexanol (0.2 part by mass) were mixed, and toluene (45 parts by mass) was added to the mixture to obtain a silicone adhesive base composition IV containing the active component of approximately 50% by mass.

### <Preparation Example 5>

An (A-3) organopolysiloxane (22.5 parts by mass) represented by the following formula, having a viscosity at 25 °C of 44,000 mPa -s as dissolved in toluene at a concentration of 30% by mass, capped at both ends of the molecular chain having vinyl groups, and having an amount of alkenyl groups of 0.0020 mol/100 g, 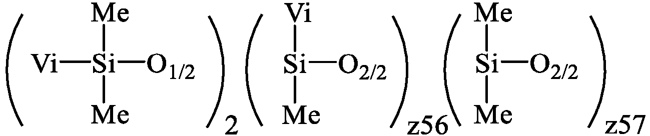 wherein z56 and z57 are numbers satisfying the aforesaid viscosity and vinyl group content,
an (A'-1) organopolysiloxane (20 parts by mass) represented by the following formula, having a viscosity at 25 °C of 70,000 mPa -s as dissolved in toluene at a concentration of 30% by mass, capped at both ends of the molecular chain having SiOH groups, and having no alkenyl groups, 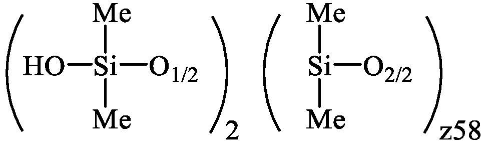 wherein z58 is a number satisfying the aforesaid viscosity,
the (B-1) toluene solution described in Preparation Example 1 (115 parts by mass) containing 50% by mass of an organopolysiloxane composed of Me₃SiO_{1/2} units, MeViSiO_{2/2} units, and SiO_{4/2} units and having hydroxyl groups bonded to silicon atoms, and
(E-1) ethynylcyclohexanol (0.2 part by mass) were mixed, and toluene (42.5 parts by mass) was added to the mixture to obtain a silicone adhesive base composition V containing the active component of approximately 50% by mass.

### <Preparation Example 6>

The (A-1) organopolysiloxane described in Preparation Example 1 (42.5 parts by mass), capped at both ends of the molecular chain having vinyl groups and having an amount of alkenyl groups of 0.0008 mol/100 g,
the (B-1) toluene solution described in Preparation Example 1 (90 parts by mass) containing 50% by mass of an organopolysiloxane composed of Me₃SiO_{1/2} units, MeViSiO_{2/2} units, and SiO_{4/2} units and having hydroxyl groups bonded to silicon atoms,
a (B'-1) toluene solution (25 parts by mass) containing 50% by mass of an organopolysiloxane composed of Me₃SiO_{1/2} units and SiO_{4/2} units and having hydroxyl groups bonded to silicon atoms (Me₃SiO_{1/2} units/SiO_{4/2} units (molar ratio) = 0.69/1.0; weight average molecular weight = 4,200; amount of contained hydroxyl groups bonded to silicon atoms = 0.048 mol/100 g; and having the hydroxyl groups bonded to silicon atoms derived from SiO_{4/2} units), and
(E-1) ethynylcyclohexanol (0.20 part by mass) were mixed, and toluene (42.5 parts by mass) was added to the mixture to obtain a silicone adhesive base composition VI containing the active component of approximately 50% by mass.

### <Preparation Example 7>

The (A-1) organopolysiloxane described in Preparation Example 1 (42.5 parts by mass), capped at both ends of the molecular chain having vinyl groups and having an amount of alkenyl groups of 0.0008 mol/100 g,
the (B-1) toluene solution described in Preparation Example 1 (76 parts by mass) containing 50% by mass of an organopolysiloxane composed of Me₃SiO_{1/2} units, MeViSiO_{2/2} units, and SiO_{4/2} units and having hydroxyl groups bonded to silicon atoms,
the (B'-1) toluene solution described in Preparation Example 6 (39 parts by mass) containing 50% by mass of an organopolysiloxane composed of Me₃SiO_{1/2} units and SiO_{4/2} units and having hydroxyl groups bonded to silicon atoms, and
(E-1) ethynylcyclohexanol (0.2 part by mass) were mixed, and toluene (42.5 parts by mass) was added to the mixture to obtain a silicone adhesive base composition VII containing the active component of approximately 50% by mass.

### <Preparation Example 8>

The (A'-1) organopolysiloxane described in Preparation Example 5 (7.8 parts by mass), capped at both ends of the molecular chain having SiOH groups and having no alkenyl groups,
a (B'-2) toluene solution (30 parts by mass) containing 50% by mass of an organopolysiloxane composed of Me₃SiO_{1/2} units and SiO_{4/2} units and having hydroxyl groups bonded to silicon atoms (Me₃SiO_{1/2} units/SiO_{4/2} units (molar ratio) = 0.84/1.0; weight average molecular weight = 3,400; amount of contained hydroxyl groups bonded to silicon atoms = 0.108 mol/100 g; and having the hydroxyl groups bonded to silicon atoms derived from SiO_{4/2} units), and
toluene (7.8 parts by mass), and aqueous ammonia (0.1 part by mass) were mixed, and the resulting solution was stirred at room temperature (25 °C) for 12 hours and subjected to a condensation reaction. The solution was then heated at approximately 110 to 125 °C for 6 hours under reflux to distill off the ammonia and water. The resulting reaction product was allowed to cool, and then to this,
the (A-1) organopolysiloxane described in Preparation Example 1 (31.5 parts by mass), capped at both ends of the molecular chain having vinyl groups and having an amount of alkenyl groups of 0.0008 mol/100 g,
the (B-1) toluene solution described in Preparation Example 1 (91.4 parts by mass) containing 50% by mass of an organopolysiloxane composed of Me₃SiO_{1/2} units, MeViSiO_{2/2} units, and SiO_{4/2} units and having hydroxyl groups bonded to silicon atoms, and
(E-1) ethynylcyclohexanol (0.2 part by mass) were added, and toluene was added and mixed in an amount such that the solid content was approximately 50% by mass to obtain a silicone adhesive base composition VIII.

### <Preparation Example 9>

The (A-1) organopolysiloxane described in Preparation Example 1 (45 parts by mass), capped at both ends of the molecular chain having vinyl groups and having an amount of alkenyl groups of 0.0008 mol/100 g,
a (B-2) toluene solution (110 parts by mass) containing 50% by mass of an organopolysiloxane composed of Me₃SiO_{1/2} units, Me₂ViSiO_{1/2} units, and SiO_{4/2} units and having hydroxyl groups bonded to silicon atoms (Me₃SiO_{1/2} units/Me₂ViSiO_{1/2} units/SiO_{4/2} units (molar ratio) = 0.73/0.12/1.0; weight average molecular weight = 3,800; amount of contained alkenyl groups = 0.089 mol/100 g; amount of contained hydroxyl groups bonded to silicon atoms = 0.026 mol/100 g; and having the hydroxyl groups bonded to silicon atoms derived from SiO_{4/2} units), and
(E-1) ethynylcyclohexanol (0.2 part by mass) were mixed, and toluene (45 parts by mass) was added to the mixture to obtain a silicone adhesive base composition IX containing the active component of approximately 50% by mass.

### <Preparation Example 10>

The (A-1) organopolysiloxane described in Preparation Example 1 (37.5 parts by mass), capped at both ends of the molecular chain having vinyl groups and having an amount of alkenyl groups of 0.0008 mol/100 g,
the (B-2) organopolysiloxane described in Preparation Example 9 (125 parts by mass) composed of Me₃SiO_{1/2} units, Me₂ViSiO_{1/2} units, and SiO_{4/2} units and having hydroxyl groups bonded to silicon atoms, and
(E-1) ethynylcyclohexanol (0.2 part by mass) were mixed, and toluene (37.5 parts by mass) was added to the mixture to obtain a silicone adhesive base composition X containing the active component of approximately 50% by mass.

### <Preparation Example 11>

The (A-1) organopolysiloxane described in Preparation Example 1 (40 parts by mass), capped at both ends of the molecular chain having vinyl groups and having an amount of alkenyl groups of 0.0008 mol/100 g,
the (B-2) organopolysiloxane described in Preparation Example 9 (100 parts by mass) composed of Me₃SiO_{1/2} units, Me₂ViSiO_{1/2} units, and SiO_{4/2} units and having hydroxyl groups bonded to silicon atoms,
a (B'-3) toluene solution (20 parts by mass) containing 50% by mass of an organopolysiloxane composed of Me₃SiO_{1/2} units and SiO_{4/2} units and having hydroxyl groups bonded to silicon atoms (Me₃SiO_{1/2} units/SiO_{4/2} units (molar ratio) = 0.83/1.0; weight average molecular weight = 4,600; amount of contained hydroxyl groups bonded to silicon atoms = 0.078 mol/100 g; and having the hydroxyl groups bonded to silicon atoms derived from SiO_{4/2} units), and
(E-1) ethynylcyclohexanol (0.2 part by mass) were mixed, and toluene (40 parts by mass) was added to the mixture to obtain a silicone adhesive base composition XI containing the active component of approximately 50% by mass.

### <Comparative Preparation Example 12>

The (A-1) organopolysiloxane described in Preparation Example 1 (45 parts by mass), capped at both ends of the molecular chain having vinyl groups and having an amount of alkenyl groups of 0.0008 mol/100 g,
the (B'-1) toluene solution described in Preparation Example 6 (110 parts by mass) containing 50% by mass of an organopolysiloxane composed of Me₃SiO_{1/2} units and SiO_{4/2} units and having hydroxyl groups bonded to silicon atoms, and
(E-1) ethynylcyclohexanol (0.2 part by mass) were mixed, and toluene (45 parts by mass) was added to the mixture to obtain a silicone adhesive base composition XII containing the active component of approximately 50% by mass.

### <Comparative Preparation Example 13>

The (A-1) organopolysiloxane described in Preparation Example 1 (36 parts by mass), capped at both ends of the molecular chain having vinyl groups and having an amount of alkenyl groups of 0.0008 mol/100 g,
the (B'-3) toluene solution described in Preparation Example 11 (128 parts by mass) containing 50% by mass of an organopolysiloxane composed of Me₃SiO_{1/2} units and SiO_{4/2} units and having hydroxyl groups bonded to silicon atoms, and
(E-1) ethynylcyclohexanol (0.2 part by mass) were mixed, and toluene (36 parts by mass) was added to the mixture to obtain a silicone adhesive base composition XIII containing the active component of approximately 50% by mass.

### <Comparative Preparation Example 14>

An organopolysiloxane (42.5 parts by mass) represented by the following formula (A-4 for Comparative Examples), having a viscosity at 25 °C of 22,000 mPa -s as dissolved in toluene at a concentration of 30% by mass, capped at both ends of the molecular chain having vinyl groups, and having an amount of alkenyl groups of 0.040 mol/100 g, 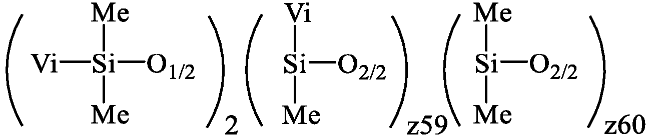 wherein z59 and z60 are numbers satisfying the aforesaid viscosity and vinyl group content,
the (B-1) toluene solution described in Preparation Example 1 (115 parts by mass) containing 50% by mass of an organopolysiloxane composed of Me₃SiO_{1/2} units, MeViSiO_{2/2} units, and SiO_{4/2} units and having hydroxyl groups bonded to silicon atoms, and
(E-1) ethynylcyclohexanol (0.2 part by mass) were mixed, and toluene (42.5 parts by mass) was added to the mixture to obtain a silicone adhesive base composition XIV containing the active component of approximately 50% by mass.

### <Comparative Preparation Example 15>

The (A'-1) organopolysiloxane described in Preparation Example 5 (45 parts by mass), capped at both ends of the molecular chain having SiOH groups and having no alkenyl groups,
the (B'-1) toluene solution described in Preparation Example 6 (110 parts by mass) containing 50% by mass of an organopolysiloxane composed of Me₃SiO_{1/2} units and SiO_{4/2} units and having hydroxyl groups bonded to silicon atoms,
toluene (45 parts by mass), and aqueous ammonia (0.5 part by mass) were mixed, and the resulting solution was stirred at room temperature (25 °C) for 12 hours and subjected to a condensation reaction. The solution was then heated at approximately 110 to 125 °C for 6 hours under reflux to distill off the ammonia and water. The resulting reaction product was allowed to cool, and then toluene was added and mixed in an amount such that the solid content was approximately 50% by mass to obtain a silicone adhesive base composition XV.

The components (C) and (D) and other components used in the examples and comparative examples are as follows.

### Component (C)

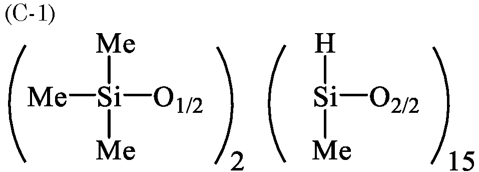

Percentage of a content of SiH groups is 41.7 %. 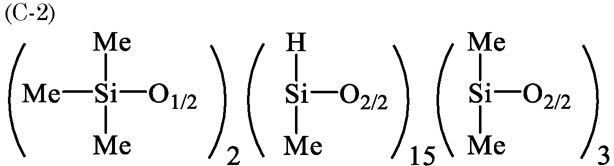 Percentage of a content of SiH groups is 35.7% 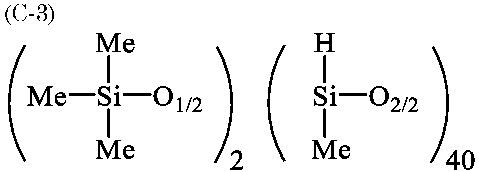 Percentage of a content of SiH groups is 46.5% 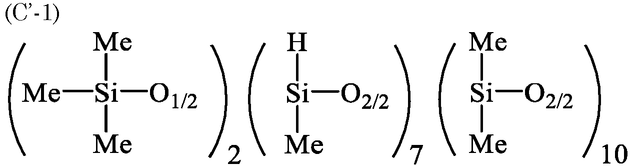 Percentage of a content of SiH groups is 17.5%

### Component (D)

### (D-1)

Platinum-based catalyst CAT-PL-50T, ex Shin-Etsu Chemical Co., Ltd.

### Additives for comparative examples

### (F-1)

Rare earth carboxylates, 6% Octope R, ex HOPE CHEMICAL Co., Ltd.

### (G-1)

Organic peroxide curing agent, Niper BMT-K40, ex NOF CORPORATION.

### [Production of silicone adhesive composition and adhesive tape]

### <Examples 1 to 17 and Comparative Examples 1 to 10>

The silicone adhesive base composition as well as the aforesaid components (C) and (C') were placed in a flask according to the amounts shown in Tables 1 to 5, 50 parts by mass of toluene were added, and stirring was performed for dissolution. To the resulting solution, component (D-1) was added, with respect to the total mass of components (A), (A'), (B), (B'), (C), and (C'), in an amount of 50 ppm (by mass of platinum), and stirring and mixing were performed to prepare a silicone adhesive composition. A polyimide film having a thickness of 25 µm and a width of 25 mm was coated with this silicone adhesive composition using an applicator such that the adhesive layer after curing was 40 µm thick, and then heating was performed at 130 °C for 1 minute to cure the adhesive layer, producing an adhesive tape.
The adhesive strength, adhesive strength during heating, and retention power of the resulting adhesive tape were determined according to the methods below. The results are shown in Tables 1 to 5.

### <Comparative Example 11>

The silicone adhesive base composition XV, component (C), and additive (F-1) for the comparative examples were placed in a flask according to the amounts shown in Table 5, 50 parts by mass of toluene were added, and stirring was performed for dissolution. To the resulting solution, component (G-1) was added in an amount of 3.0 parts by mass, and stirring and mixing were performed to prepare a silicone adhesive composition. A polyimide film having a thickness of 25 µm and a width of 25 mm was coated with this silicone adhesive composition using an applicator such that the adhesive layer after curing was 40 µm thick, and then heating was performed at 165 °C for 2 minutes to cure the adhesive layer, producing an adhesive tape.

The adhesive strength, adhesive strength during heating, and retention power of the resulting adhesive tape were determined according to the methods below. The results are shown in Table 5.

### [Adhesive strength]

An adhesive tape was affixed to a stainless-steel plate and was pressure-bonded by rolling a 2 kg rubber-coated roller over the tape back and forth once. The tape was left at room temperature (25 °C, 50% RH) for approximately 20 hours. Thereafter, the average force (N/25 mm) required to peel the adhesive tape from the stainless-steel plate at an angle of 180° and a speed of 300 mm/min was determined with a tensile tester at room temperature.

### [Adhesive strength during heating]

An adhesive tape was affixed to a stainless steel plate and was pressure-bonded by rolling a 2 kg rubber-coated roller over the tape back and forth once. The tape was left at room temperature (25 °C, 50% RH) for approximately 20 hours. Thereafter, the average force (N/25 mm) required to peel the adhesive tape from the stainless-steel plate at an angle of 180° and a speed of 300 mm/min was determined with a tensile tester equipped with a thermostatic chamber in a 180 °C environment.

### [Retention power]

An adhesive tape was affixed to the lower end of a stainless-steel plate to make an adhesive area have a width of 25 mm and a length of 25 mm, and was pressure-bonded by rolling a 2 kg rubber-coated roller over the tape back and forth once. A load of 1 kg was placed on the lower end of the adhesive tape, and the displacement (mm) after leaving the tape vertically at 200 °C for 1 hour was determined by magnification with a microscope.

**[Table 1]**

| | | | Examples | | | | | |
|---|---|---|---|---|---|---|---|---|
| | | | 1 | 2 | 3 | 4 | 5 | 6 |
| Silicone adhesive base, part by mass | | | I 200 | II 200 | II 200 | II 200 | II 200 | II 200 |
| Components contained in the silicone adhesive base | (A) part by mass | A-1 | 52 | 42.5 | 42.5 | 42.5 | 42.5 | 42.5 |
| | (B) part by mass | B-1 | 48 | 57.5 | 57.5 | 57.5 | 57.5 | 57.5 |
| | Solvent, part by mass | Toluene | 100 | 100 | 100 | 100 | 100 | 100 |
| (C) part by mass | | C-1 | 2.12 | 2.11 | 2.42 | 3.05 | | |
| | | C-2 | | | | | 2.93 | |
| | | C-3 | | | | | | 2.19 |
| A ratio of mass of (A)/(B) | | | 52.0/ 48.0 | 42.5/ 57.5 | 42.5/ 57.5 | 42.5/ 57.5 | 42.5/ 57.5 | 42.5/ 57.5 |
| A ratio of the number of SiH/Vi [SiH groups of (C)]/ [Vi groups of (A) and (B)] | | | 0.50 | 0.42 | 0.48 | 0.60 | 0.48 | 0.48 |
| Adhesive strength, N/25mm | | | 5.6 | 7.5 | 7.3 | 7.0 | 7.1 | 5.1 |
| Adhesive strength during heating, N/25mm | | | 4.4 | 4.9 | 5.0 | 5.2 | 5.0 | 3.9 |
| Retention power, mm | | | 0.01 | 0.05 | 0.01 | 0.01 | 0.01 | 0.02 |

**[Table 2]**

| | | | Examples | | | | | |
|---|---|---|---|---|---|---|---|---|
| | | | 7 | 8 | 9 | 10 | 11 | 12 |
| Silicone adhesive base, part by mass | | | II 200 | III 200 | IV 200 | V 200 | VI 200 | VII 200 |
| Components contained in the silicone adhesive base | (A) part by mass | A-1 | 42.5 | 35.5 | | | 42.5 | 42.5 |
| | | A-2 | | | 45 | | | |
| | | A-3 | | | | 22.5 | | |
| | (A) part by mass | A'-1 | | | | 20 | | |
| | (B) part by mass | B-1 | 57.5 | 64.5 | 55 | 57.5 | 45 | 38 |
| | (B') part by mass | B'-1 | | | | | 12.5 | 19.5 |
| | Solvent, part by mass | Toluene | 100 | 100 | 100 | 100 | 100 | 100 |
| (C) part by mass | | C-1 | 1.55 | 3.24 | 2.40 | 2.42 | 1.99 | 1.76 |
| (C') part by mass | | C'-1 | 2.28 | | | | | |
| A ratio of mass of (A)/(B) | | | 42.5/ 57.5 | 35.5/ 64.5 | 45.0/ 55.0 | 28.1/ 71.9 | 48.6/ 51.4 | 52.8/ 47.2 |
| A ratio of the number of SiH/Vi [SiH groups of (C)]/ [Vi groups of (A) and (B)] | | | 0.31 | 0.57 | 0.50 | 0.48 | 0.50 | 0.53 |
| A ratio of the number of SiH/Vi [SiH groups of (C')]/ [Vi groups of (A) and (B)] | | | 0.17 | | | | | |
| Adhesive strength, N/25mm | | | 7.2 | 7.9 | 7.3 | 6.6 | 6.8 | 6.4 |
| Adhesive strength during heating, N/25mm | | | 5.2 | 5.3 | 4.7 | 3.8 | 4.5 | 4.3 |
| Retention power, mm | | | 0.01 | 0.01 | 0.03 | 0.03 | 0.02 | 0.03 |

**[Table 3]**

| | | | Examples | | | | |
|---|---|---|---|---|---|---|---|
| | | | 13 | 14 | 15 | 16 | 17 |
| Silicone adhesive base, part by mass | | | VIII (Note 1) 200 | IX 200 | IX 200 | X 200 | XI 200 |
| Components contained in the silicone adhesive base | (A) part by mass | A-1 | 31.5 | 45 | 45 | 37.5 | 40 |
| | (A') part by mass | A'-1 | 7.8 | | | | |
| | (B) part by mass | B-1 | 45.7 | | | | |
| | | B-2 | | 55 | 55 | 62.5 | 50 |
| | (B') part by mass | B'-2 | 15 | | | | |
| | | B'-3 | | | | | 10 |
| | Solvent, part by mass | Toluene | 100 | 100 | 100 | 100 | 100 |
| (C) part by mass | | C-1 | 2.33 | 1.27 | 2.25 | 1.90 | 1.54 |
| A ratio of mass of (A)/(B) | | | 40.8/ 59.2 | 45.0/ 55.0 | 45.0/ 55.0 | 37.5/ 62.5 | 44.4/ 55.6 |
| A ratio of the number of SiH/Vi [SiH groups of (C)]/ [Vi groups of (A) and (B)] | | | 0.58 | 0.36 | 0.64 | 0.48 | 0.48 |
| Adhesive strength, N/25mm | | | 7.6 | 4.7 | 3.6 | 5.2 | 5.3 |
| Adhesive strength during heating, N/25mm | | | 4.5 | 4.3 | 3.4 | 4.6 | 4.3 |
| Retention power, mm | | | 0.03 | 0.04 | 0.01 | 0.02 | 0.01 |

| | | | | | | | |
|---|---|---|---|---|---|---|---|
| Note 1: The composition contained a condensation reaction product of components (A') and (B'). | | | | | | | |

**[Table 4]**

| | | | Comparative Examples | | | | | |
|---|---|---|---|---|---|---|---|---|
| | | | 1 | 2 | 3 | 4 | 5 | 6 |
| Silicone adhesive base, part by mass | | | XII 200 | XII 200 | XII 200 | XII 200 | XIII 200 | XIV 200 |
| Components contained in the silicone adhesive base | (A) part by mass | A-1 | 45 | 45 | 45 | 45 | 36 | |
| | (A) for comparative, part by mass | A-4 | | | | | | 42.5 |
| | (B) part by mass | B-1 | | | | | | 57.5 |
| | (B') part by mass | B'-1 | 55 | 55 | 55 | 55 | | |
| | | B'-3 | | | | | 64 | |
| | Solvent part by mass | Toluene | 100 | 100 | 100 | 100 | 100 | 100 |
| (C) part by mass | | C-1 | 0.013 | | | | | 2.99 |
| | | C-3 | | 0.011 | 0.035 | 0.12 | 0.28 | |
| A ratio of mass of (A)/(B) | | | 100/ 0 | 100/ 0 | 100/ 0 | 100/ 0 | 100/ 0 | 42.5/ 57.5 |
| A ratio of the number of SiH/Vi [SiH groups of (C)]/ [Vi groups of (A) and (B)] | | | 0.51 | 0.48 | 1.51 | 5.19 | 15.15 | 0.48 |
| Adhesive strength, N/25mm | | | × (Note 2) | × (Note 2) | × (Note 2) | 4.9 | 9.2 | 0.6 |
| Adhesive strength during heating, N/25mm | | | × (Note 2) | × (Note 2) | × (Note 2) | 2.1 | 1.6 | 0.1 |
| Retention power, mm | | | × (Note 3) | × (Note 3) | × (Note 3) | 0.01 | 0.01 | 0.02 |

| | | | | | | | | |
|---|---|---|---|---|---|---|---|---|
| Note 2: Cohesion Failure Note 3: A distance of the displacement was more than 25 mm and the load fell. | | | | | | | | |

**[Table 5]**

| | | | Comparative Examples | | | | |
|---|---|---|---|---|---|---|---|
| | | | 7 | 8 | 9 | 10 | 11 |
| Silicone adhesive base, part by mass | | | II 200 | IX 200 | II 200 | IX 200 | XV (Note 1) 200 |
| Components contained in the silicone adhesive base | (A) part by mass | A-1 | 42.5 | 45 | 42.5 | 45 | |
| | (A') part by mass | A'-1 | | | | | 45 |
| | (B) part by mass | B-1 | 57.5 | | 57.5 | | |
| | | B-2 | | 55 | | 55 | |
| | (B') part by mass | B'-1 | | | | | 55 |
| | Solvent part by mass | Toluene | 100 | 100 | 100 | 100 | 100 |
| (C) part by mass | | C-1 | | | 10.40 | 7.35 | |
| | | C-3 | | | | | 1.00 |
| (C') part by mass | | C'-1 | 6.46 | 4.47 | | | |
| Additives for comparative, part by mass | | F-1 | | | | | 0.16 |
| A ratio of mass of (A)/(B) | | | 42.5/ 57.5 | 45.0/ 55.0 | 42.5/ 57.5 | 45.0/ 55.0 | - |
| A ratio of the number of SiH/Vi [SiH groups of (C)]/ [Vi groups of (A) and (B)] | | | | | 2.06 | 2.10 | - |
| A ratio of the number of SiH/Vi [SiH groups of (C')]/ [Vi groups of (A) and (B)] | | | 0.48 | 0.48 | | | |
| Adhesive strength, N/25mm | | | 7.1 | 0.4 | 0.6 | 0.2 | 6.5 |
| Adhesive strength during heating, N/25mm | | | × (Note 2) | 0.6 | × (Note 2) | 0.2 | 1.9 |
| Retention power, mm | | | 0.02 | 0.01 | 0.01 | 0.01 | 0.06 |

| | | | | | | | |
|---|---|---|---|---|---|---|---|
| Note 1: The composition contained a condensation reaction product of components (A') and (B'). Note 2: Cohesion Failure | | | | | | | |

As shown in Tables 4 and 5, in the compositions of Comparative Examples 1 to 5, which used component (B') instead of component (B), since the compositions of Comparative Examples 1 to 3 each had a ratio of the number of SiH groups in component (C) to the number of alkenyl groups in component (A) of 0.48 to 1.51 and did not contain component (B), the crosslink densities were insufficient, resulting in cohesive failure and making it impossible to peel off cleanly. In the composition of Comparative Example 4, in which the amount of component (C) was increased with respect to the aforesaid compositions, the adhesive strength at room temperature was 4.9 N/25 mm, but the adhesive strength during heating at 180 °C was 2.1 N/25 mm, decreasing to less than half of the adhesive strength at room temperature. The composition of Comparative Example 5 had an adhesive strength at room temperature of 9.2 N/25 mm, but the adhesive strength during heating at 180 °C was 1.6 N/25 mm, decreasing significantly.

Further, the composition of Comparative Example 6, which used component (A-4) having a high amount of contained alkenyl groups, had an excessively high crosslink density, resulting in a hardened adhesive layer and a decrease in adhesive strength. The cured product obtained from the composition of Comparative Example 7, which used component (C'-1) having a small proportion of SiH groups, caused Cohesion Failure when heated at 180 °C. In the cured product obtained from the composition of Comparative Example 8, the adhesive strength decreased significantly. Further, the compositions of Comparative Examples 9 and 10, in which the ratio of the number of SiH groups in component (C) to the total number of alkenyl groups in components (A) and (B) was greater than 2.0, had excessively high crosslink densities, resulting in hardened adhesive layers and decreases in adhesive strength. In the cured product obtained from the composition of Comparative Example 11, in which component (C-3) and rare-earth carboxylate (F-1) were added to a peroxide-curing adhesive, the adhesive strength at room temperature was 6.5 N/25 mm, but the adhesive strength during heating at 180 °C was 1.9 N/25 mm, decreasing to less than half of the adhesive strength at room temperature.

In contrast, as shown in Tables 1 to 3, an adhesive tape obtained from the silicone adhesive composition of the present invention maintains its high adhesive strength at room temperature even during heating at 180 °C, and the decrease in adhesive strength is small. Furthermore, the retention power during heating is also favorable.

### INDUSTRIAL APPLICABILITY

An adhesive tape or adhesive film that includes an adhesive layer made by curing the silicone adhesive composition of the present invention maintains high adhesive strength and retention power even in high temperatures exceeding 150 °C. Therefore, this adhesive tape or adhesive film is suitably used as a tape for masking or temporarily fixing electrical components or semiconductor components during a manufacturing process thereof, or as a heat seal tape.

## Claims

1. A silicone adhesive composition comprising the following components (A) to (D):
(A) 20 to 65 parts by mass of a linear organopolysiloxane having two or more alkenyl groups per molecule and an alkenyl group content of 0.0001 to 0.03 mol/100 g,
(B) 35 to 80 parts by mass of an organopolysiloxane resin having one or more alkenyl groups per molecule and having R³₃SiO_{1/2} and SiO_{4/2} units in an amount such that a molar ratio of R³₃SiO_{1/2} units to SiO_{4/2} units is 0.5 to 1.5, wherein R³ is, independently of each other, a substituted or unsubstituted, monovalent hydrocarbon group having 1 to 10 carbon atoms,
provided that the total amount of components (A) and (B) is 100 parts by mass,
(C) an organohydrogenpolysiloxane having three or more hydrogen atoms each bonded to a silicon atom per molecule, wherein a proportion of a total number of the hydrogen atom bonded to a silicon atom is 20% to 50%, based on the total number of the hydrogen atom and groups bonded to silicon atoms, and an average polymerization degree of the siloxane is 100 or less, in an amount such that a ratio of the total number of SiH groups in component (C) to the total number of alkenyl groups in components (A) and (B) is 0.1 to 2.0, and
(D) a catalyst amount of platinum group metal catalyst.

2. The silicone adhesive composition according to claim 1, wherein said component (B) has alkenyl groups in an amount of 0.005 to 0.5 mol/100 g.

3. The silicone adhesive composition according to claim 1 or 2, wherein the ratio of the total number of SiH groups in component (C) to the total number of alkenyl groups in components (A) and (B) is 0.15 to 0.95.

4. The silicone adhesive composition according to any one of claims 1 to 3, wherein component (A) is represented by the following formula (1), 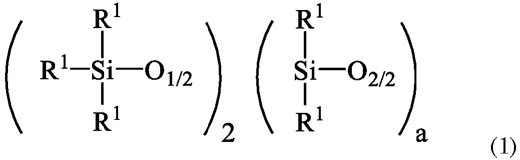 wherein R¹ is, independently of each other, a hydroxyl group or a substituted or unsubstituted monovalent hydrocarbon group having 1 to 10 carbon atoms, provided that at least two of R¹ are an alkenyl group-containing organic group having 2 to 10 carbon atoms, the ratio of the number of hydroxyl groups to the total number of R¹ is 10% or less and the alkenyl group content is 0.0001 to 0.03 mol/100 g, and *a* is the number such that the viscosity at 25 °C of a 30 mass % solution of the organopolysiloxane dissolved in toluene is 1,000 to 200,000 mPa.s.

5. The silicone adhesive composition according to any one of claims 1 to 4, wherein component (C) is represented by the following formula (4), 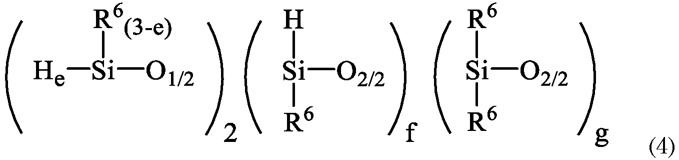 wherein R⁶ is, independently of each other, a hydroxyl group or a substituted or unsubstituted, monovalent hydrocarbon group having 1 to 10 carbon atoms and having no aliphatic unsaturated bond, e is 0 or 1, f and g are integers satisfying equations of 1 ≤ f ≤ 98, 0 ≤ g <_ 60, 3 ≤ 2e + f ≤ 100, and 3 ≤ f+ g + 2 ≤ 100 and, a percentage of the total number of the hydrogen atom bonded to a silicon atom is 20 % to 50 %, based on the total number of the hydrogen atom and the group, R⁶, bonded to a silicon atom, and a percentage of the number of hydroxyl groups is 10% or less based on the total number of R⁶.

6. The silicone adhesive composition according to any one of claims 1 to 5, wherein component (B) further has a R⁴ R⁵ SiO_{2 / 2} unit and a molar ratio of R⁴R⁵SiO_{2 / 2} units to SiO_{4/2} units is 0.01 to 0.5, wherein R⁴ is a group defined for the aforesaid R³ other than an alkenyl group and R⁵ is an alkenyl group having 2 to 10 carbon atoms.

7. A cured product composed of curing the silicone adhesive composition according to any one of claims 1 to 6.

8. An adhesive tape having a substrate and an adhesive layer formed on at least one side of the substrate, wherein the adhesive layer is the cured product according to claim 7.

9. An adhesive film having a substrate and an adhesive layer formed on at least one side of the substrate, wherein the adhesive layer is the cured product according to claim 7.
